# EUROPEAN PATENT APPLICATION

(11) **EP 4 039 753 A1**
(43) Date of publication of application: **10.08.2022**
(21) Application number: 20873183.6
(22) Date of filing: 24.08.2020
(51) Int. Cl.: C09B 33/10, B41J 2/01, C09D 11/32, B41M 5/00, D06P 1/18, D06P 5/30, C09B 67/20, C09B 67/46

(54) **COLORED RESIN PARTICLE DISPERSION, INK, INK SET, METHOD FOR INKJET TEXTILE PRINTING, METHOD FOR PRODUCING OIL-SOLUBLE DYE, AND TEXTILE-PRINTED ARTICLE**

(30) Priority: 30.09.2019 JP 2019180626
(71) Applicant: FUJIFILM Corporation, Tokyo 106-8620 (JP)
(72) Inventor: SUZUKI, Shota, Ashigarakami-gun, Kanagawa 258-8577 (JP); TAMAKUNI, Fumiko, Ashigarakami-gun, Kanagawa 258-8577 (JP); HAMADA, Naoka, Ashigarakami-gun, Kanagawa 258-8577 (JP); SATO, Noriaki, Ashigarakami-gun, Kanagawa 258-8577 (JP)
(74) Representative: Klunker IP Patentanwälte PartG mbB
(86) International application number: PCT/JP2020/031884
(87) International publication number: WO 2021/065250

(57) **Abstract**

Provided are a colored resin particle dispersion containing water and colored resin particles containing a polymer P containing a hydrophilic group and an oil-soluble dye, in which the oil-soluble dye includes an oil-soluble dye (D) obtained by modifying a water-soluble reactive dye with an alkyl group having 4 or more carbon atoms, or exchanging a counter cation in an acid dye with an organic cation containing an alkyl group having 4 or more carbon atoms, an ink, an ink set, an ink jet textile printing method, and a printed textile product.

## Description

### BACKGROUND OF THE INVENTION

### 1. Field of the Invention

The present disclosure relates to a colored resin particle dispersion, an ink, an ink set, an ink jet textile printing method, a manufacturing method of an oil-soluble dye, and a printed textile product.

### 2. Description of the Related Art

Various studies have been conducted on techniques for forming an image by an ink jet method. In recent years, images have also been formed on a fabric by an ink jet method. In this aspect, the image formation is referred to as ink jet textile printing.

For example, JP2002-20661A discloses an aqueous ink for ink jet recording which has excellent water resistance, light fastness, and storage stability, and is the most suitable for an ink jet recording method, in which at least one type of azo colorant having a specific structure is contained in an ink containing water, a colorant, and a resin as main components.

JP2018-150401A discloses, an ink composition for ink jet textile printing which has excellent storage stability and continuous printing stability, does not impose a burden on a head by maintenance of wiping with a solidified ink, is friendly to printing environment and a printer apparatus, and can obtain a good printed textile product, containing (A) an organic acid with a lactone structure having a hydroxyl group as a substituent in which one or more hydroxyl groups are converted into alkali chloride, (B) a coloring agent, (C) a styrene-(meth)acrylic copolymer, (D) glycerin, and (E) an urethane resin.

### SUMMARY OF THE INVENTION

In image formation using an ink containing a coloring material and water (that is, an aqueous ink), it may be required to form an image having more excellent optical density.

In order to improve the optical density of an image, it is considered effective to use a dye having oil solubility (that is, an oil-soluble dye) as a coloring material in the ink. In a case where an image is formed on a recording medium using an ink containing an oil-soluble dye, the oil-soluble dye can be densely aggregated in a surface and/or a surface layer portion of the recording medium, and thus it is thought that an image having excellent optical density can be formed.

However, inks containing an oil-soluble dye and water may have poor storage stability.

From the above viewpoints, it is considered desirable to provide an aqueous ink which can form an image having excellent optical density and has excellent storage stability.

An object of an aspect of the present disclosure is to provide a colored resin particle dispersion and an ink which can form an image having excellent optical density and have excellent storage stability.

An object of another aspect of the present disclosure is to provide an ink set including the ink and an ink jet textile printing method using the ink.

An object of still another aspect of the present disclosure is to provide a manufacturing method of an oil-soluble dye which can manufacture a suitable oil-soluble dye as a dye in the colored resin particle dispersion.

An object of yet another aspect of the present disclosure is to provide a printed textile product including an image having excellent optical density.

Specifically, the following aspects are included in order to achieve the objects.
<1> A colored resin particle dispersion comprising: water; and
   colored resin particles containing a polymer P containing a hydrophilic group and an oil-soluble dye,
   in which the oil-soluble dye includes an oil-soluble dye (D) obtained by modifying a water-soluble reactive dye with an alkyl group having 4 or more carbon atoms, or exchanging a counter cation in an acid dye with an organic cation containing an alkyl group having 4 or more carbon atoms.
<2> A colored resin particle dispersion comprising: water; and
   colored resin particles containing an oil-soluble dye and a polymer P containing a hydrophilic group,
   in which the oil-soluble dye includes an oil-soluble dye (D1) represented by Formula (D1).

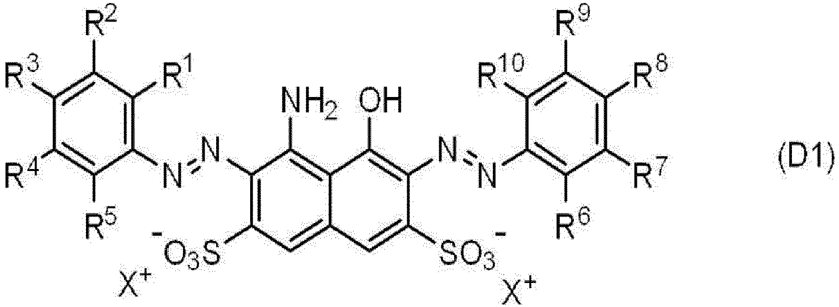

In Formula (D1),
R¹ to R¹⁰ each independently represent a hydrocarbon group having 1 to 60 carbon atoms which may contain an oxygen atom, a nitrogen atom, a sulfur atom, or a chlorine atom, a hydrogen atom, a chlorine atom, a nitro group, an amino group, a sulfo group, or a salt of a sulfo group, and
two X⁺'s represent an inorganic cation or an organic cation.

At least one of a condition that at least one of R¹, ..., or R¹⁰ is a group containing an alkyl group having 4 or more carbon atoms, or a condition that at least one of two X⁺'s is an organic cation containing an alkyl group having 4 or more carbon atoms is satisfied.

<3> The colored resin particle dispersion according to <2>, in which the oil-soluble dye (D1) is an oil-soluble dye (D2) represented by Formula (D2).

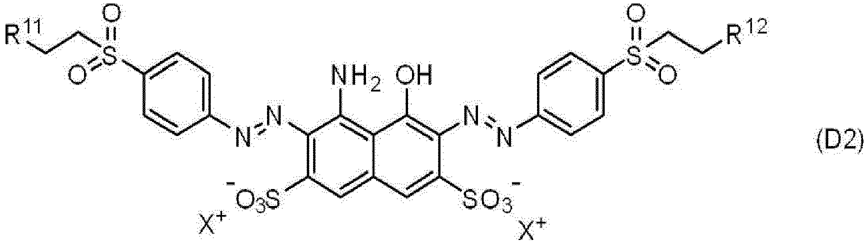

In Formula (D2),
R¹¹ and R¹² each independently represent a hydrocarbon group having 1 to 50 carbon atoms which may contain an oxygen atom, a nitrogen atom, or a sulfur atom, and
two X⁺'s represent an inorganic cation or an organic cation.

At least one of a condition that at least one of R¹¹ or R¹² is a group containing an alkyl group having 4 or more carbon atoms, or a condition that at least one of two X⁺'s is an organic cation containing an alkyl group having 4 or more carbon atoms is satisfied.

<4> The colored resin particle dispersion according to <2> or <3>, in which the oil-soluble dye (D1) is an oil-soluble dye (D3) represented by Formula (D3).

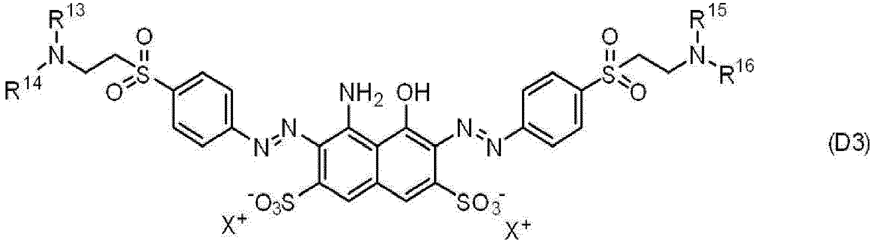

In Formula (D3),
R¹³ to R¹⁶ each independently represent a hydrocarbon group having 1 to 25 carbon atoms which may contain an oxygen atom, a nitrogen atom, or a sulfur atom, or a hydrogen atom, and
two X⁺'s represent an inorganic cation or an organic cation.

At least one of a condition that at least one of R¹³, ..., or R¹⁶ is a group containing an alkyl group having 4 or more carbon atoms, or a condition that at least one of two X⁺'s is an organic cation containing an alkyl group having 4 or more carbon atoms is satisfied.

<5> The colored resin particle dispersion according to <4>, in which in formula (D3),
at least one of R¹³, ..., or R¹⁶ is a group containing an alkyl group having 4 or more carbon atoms, and
each of two X⁺'s is K⁺ or Na⁺.

<6> The colored resin particle dispersion according to any one of <1> to <5>, in which the polymer P containing a hydrophilic group further contains a structural unit represented by Formula (1) and a structural unit represented by Formula (2).

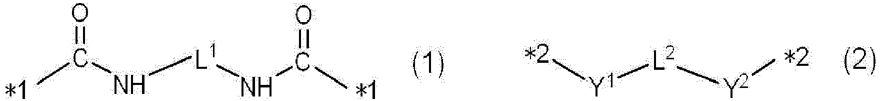

In Formula (1),
L¹ represents a hydrocarbon group, and
two ^{∗}1's each represent a bonding position.
In Formula (2),
L² represents a hydrocarbon group having 2 to 50 carbon atoms which may contain an oxygen atom, a nitrogen atom, or a sulfur atom, or a polymer chain having a number-average molecular weight of 500 or greater which consists of a polyether chain, a polyester chain, a polycaprolactone chain, a polycarbonate chain, a polybutadiene chain, a polyisoprene chain, or a polyolefin chain,
Y¹ and Y² each independently represent -O-, -S-, or -NRz-,
Rz represents a hydrogen atom or a hydrocarbon group having 1 to 20 carbon atoms, and
two ^{∗}2's each represent a bonding position.

<7> The colored resin particle dispersion according to <6>, in which L² in Formula (2) is a polymer chain having a number-average molecular weight of 500 or greater which consists of a polycarbonate chain or a polyether chain.

<8> The colored resin particle dispersion according to any one of <1> to <7>, in which a glass transition temperature of the polymer P containing a hydrophilic group is 50°C or lower.

<9> The colored resin particle dispersion according to any one of <1> to <8>, in which the hydrophilic group in the polymer P containing a hydrophilic group is at least one selected from the group consisting of a carboxyl group and a salt of a carboxyl group.

<10> The colored resin particle dispersion according to any one of <1> to <9>, in which a weight-average molecular weight of the polymer P containing a hydrophilic group is 8,000 to 30,000.

<11> An ink comprising: the colored resin particle dispersion according to any one of <1> to <10>.

<12> The ink according to <11>, which is used as an ink jet ink.

<13> The ink according to <11> or <12>, which is used as an ink for textile printing.

<14> An ink set comprising: two or more types of inks,
in which at least one of the two or more types of inks is the ink according to any one of <11> to <13>.

<15> An ink jet textile printing method comprising: a step of applying the ink according to any one of <11> to <13> to a fabric by an ink jet method; and
a step of obtaining a printed textile product by heat-treating the fabric to which the ink is applied.

<16> A manufacturing method of an oil-soluble dye comprising: a step of obtaining an oil-soluble dye by a method (1) of reacting a water-soluble reactive dye with a primary amine compound containing a group containing an alkyl group having 4 or more carbon atoms, a secondary amine compound containing a group containing an alkyl group having 4 or more carbon atoms, a hydroxy compound containing a group containing an alkyl group having 4 or more carbon atoms, or a thiol compound containing a group containing an alkyl group having 4 or more carbon atoms, or a method (2) of reacting an acid dye with a salt containing an organic cation containing an alkyl group having 4 or more carbon atoms.

<17> A printed textile product comprising: a fabric; and an image,
in which the image includes an oil-soluble dye (D) obtained by modifying a water-soluble reactive dye with an alkyl group having 4 or more carbon atoms, or exchanging a counter cation in an acid dye with an organic cation containing an alkyl group having 4 or more carbon atoms, and a polymer P containing a hydrophilic group.

According to an aspect of the present disclosure, provided are a colored resin particle dispersion and an ink which can form an image having excellent optical density and have excellent storage stability.

According to another aspect of the present disclosure, provided are an ink set including the ink and an ink jet textile printing method using the ink.

According to still another aspect of the present disclosure, provided is a manufacturing method of an oil-soluble dye which can manufacture a suitable oil-soluble dye as a dye in the colored resin particle dispersion.

According to yet another aspect of the present disclosure, provided is a printed textile product including an image having excellent optical density.

### DESCRIPTION OF THE PREFERRED EMBODIMENTS

In the present disclosure, a numerical range expressed using "to" represents a range including numerical values before and after "to" as a lower limit and an upper limit.

In the present disclosure, regarding the amount of each component in a composition, in a case where there are a plurality of substances corresponding to the component in the composition, the amount means a total amount of the plurality of substances present in the composition, unless otherwise specified.

In numerical ranges described stepwise in the present disclosure, an upper limit or a lower limit described in a numerical range may be substituted with an upper limit or a lower limit of another numerical range described stepwise, or may be substituted with a value shown in examples.

In the present disclosure, the term "step" includes not only an independent step but also cases where it cannot be clearly distinguished from other steps, so long as the desired effect of the step can be achieved.

In the present disclosure, the "image" means a film as a whole (including a coating film) formed using an ink for textile printing.

In the present disclosure, the concept of the "image" also includes a solid image.

### [Colored Resin Particle Dispersion (first aspect)]

A colored resin particle dispersion according to a first aspect of the present disclosure contains
water, and
colored resin particles containing a polymer P containing a hydrophilic group and an oil-soluble dye, and
the oil-soluble dye includes an oil-soluble dye (D) obtained by modifying a water-soluble reactive dye with an alkyl group having 4 or more carbon atoms, or exchanging a counter cation in an acid dye with an organic cation containing an alkyl group having 4 or more carbon atoms.

### In the present disclosure, the term "water-soluble" means that the amount to be dissolved in 100 g of distilled water at 25°C is more than 1 g, and the term "water-insoluble" means that the amount to be dissolved in 100 g of distilled water at 25°C is 1 g or less.

### In the present disclosure, the "oil-soluble dye" means a dye having a solubility of 5 mass% or greater in methyl ethyl ketone at 20°C (hereinafter, also referred to as "MEK solubility").

Hereinafter, obtaining the oil-soluble dye (D) by modifying a water-soluble reactive dye with an alkyl group having 4 or more carbon atoms may be referred to as "making the water-soluble reactive dye oil-soluble", and obtaining the oil-soluble dye (D) by exchanging a counter cation in an acid dye with an organic cation containing an alkyl group having 4 or more carbon atoms may be referred to as "making the acid dye oil-soluble".

The oil-soluble dye is preferably a dye having water insolubility, that is, a dye whose amount to be dissolved in 100 g of distilled water at 20°C is 1 g or less.

The colored resin particle dispersion according to the first aspect can form an image having excellent optical density and has excellent storage stability.

The reason why an image having excellent optical density can be formed is thought to be that since the oil-soluble dye (D), which is obtained by making a water-soluble reactive dye or an acid dye oil-soluble, has oil solubility, the oil-soluble dye (D) is densely aggregated in a surface and/or a surface layer portion of a recording medium (for example, fabric).

Inks containing an oil-soluble dye and water may have poor storage stability.

However, the colored resin particle dispersion according to the first aspect has excellent storage stability.

A first factor in obtaining the storage stability effect is thought to be that the colored resin particles contain the polymer P containing a hydrophilic group, and thus the dispersion stability of the colored resin particles is secured in the colored resin particle dispersion according to the first aspect.

A second factor in obtaining the storage stability effect is thought to be that the water-soluble reactive dye and the acid dye, which are raw materials of the oil-soluble dye (D), originally contain a hydrophilic group, and the oil-soluble dye (D) also contains the hydrophilic group (that is, the oil-soluble dye (D) contained in the colored resin particles has self-dispersibility).

It is thought that the storage stability effect of the colored resin particle dispersion described above is exhibited with a combination of the two factors.

In examples to be described later, the jetting property and the storage stability of an ink containing a colored resin particle dispersion were evaluated as an indicator of the storage stability of the colored resin particle dispersion.

Hereinafter, component which can be contained in the colored resin particle dispersion according to the first aspect will be described.

### <Water>

The colored resin particle dispersion according to the first aspect contains water.

The water content of the colored resin particle dispersion according to the first aspect is, for example, 40 mass% or greater, preferably 50 mass% or greater, and more preferably 60 mass% or greater with respect to the total amount of the colored resin particle dispersion according to the first aspect.

The upper limit of the water content depends on the amount of the solids in the colored resin particle dispersion according to the first aspect, and is, for example, 90 mass% with respect to the total amount of the colored resin particle dispersion according to the first aspect.

### <Colored Resin Particles>

The colored resin particle dispersion according to the first aspect contains colored resin particles.

The colored resin particles contains a polymer P containing a hydrophilic group and an oil-soluble dye.

### (Oil-Soluble Dye (D))

The oil-soluble dye contains an oil-soluble dye (D).

The oil-soluble dye (D) is obtained by modifying a water-soluble reactive dye with an alkyl group having 4 or more carbon atoms, or exchanging a counter cation in an acid dye with an organic cation containing an alkyl group having 4 or more carbon atoms.

In the oil-soluble dye (D), the number of carbon atoms of the alkyl group having 4 or more carbon atoms is preferably 4 to 25, more preferably 4 to 20, even more preferably 4 to 12, and much more preferably 4 to 10.

The alkyl group having 4 or more carbon atoms may be a linear alkyl group or a branched alkyl group.

In the present disclosure, needless to say, the water-soluble reactive dye has water solubility, and the acid dye also has water solubility.

Neither water-soluble reactive dye nor acid dye has oil solubility.

### -Water-Soluble Reactive Dye-

The water-soluble reactive dye which is an aspect of the raw material of the oil-soluble dye (D) is preferably a dye containing an anion including a dye skeleton, a counter cation, and a reactive group.

The water-soluble reactive dye is preferably the following water-soluble reactive dye (DA).

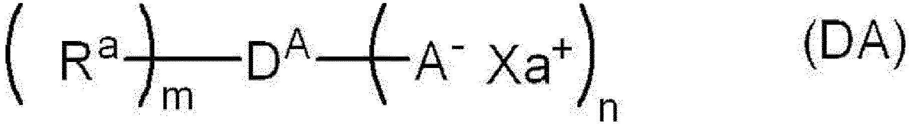

In the water-soluble reactive dye (DA), D^{A} represents a (m+n)-valent organic group having a dye skeleton, R^{a} represents a reactive group, A⁻ represents an anionic group, Xa⁺ represents a hydrogen ion (H⁺) or an alkali metal ion as a counter cation, m represents an integer of 1 or greater, and n is an integer of 1 or greater.

D^{A} is preferably a (m+n)-valent organic group having an azo dye skeleton, and more preferably a (m+n)-valent organic group having a disazo dye skeleton.

R^{a} is preferably the following reactive group (R1). In the reactive group (R1), Xb⁺ represents a hydrogen ion or an alkali metal ion, and ^{∗} represents a bonding position.

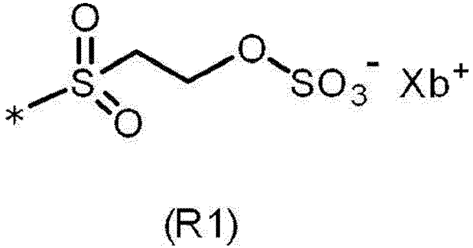

In the water-soluble reactive dye (DA), the anionic group represented by A⁻ is preferably a sulfonato group (-SO₃⁻ group) or a carboxylato group (-COO⁻ group).

In the water-soluble reactive dye (DA), the alkali metal ion represented by Xa⁺ is preferably Na⁺ or K⁺.

In the water-soluble reactive dye (DA), m is preferably an integer of 1 to 4, more preferably an integer of 1 to 3, even more preferably 1 or 2, and much more preferably 2.

In the water-soluble reactive dye (DA), n is preferably an integer of 1 to 4, more preferably an integer of 1 to 3, even more preferably 1 or 2, and much more preferably 2.

As the water-soluble reactive dye, dyes appropriately selected from water-soluble reactive dyes in which the word "Reactive" is used in the color index (C. I. ) number can be used.

Specific examples of the water-soluble reactive dye include;
C. I. Reactive Black 5, 14;
C. I. Reactive Yellow 15, 17, 23, 24, 37, 42, 57, 76, 145, 160, 167;
C. I. Reactive Orange 7, 15, 16, 56, 72, 74, 82, 107;
C. I. Reactive Red 21, 22, 23, 35, 106, 111, 112, 113, 114, 174, 180, 194, 195, 222, 223;
C. I. Reactive Violet 4, 5, 22;
C. I. Reactive Blue 19, 21, 27, 28, 38, 147, 194, 221, 222, 231; and
C. I. Reactive Brown 21, 46.

All of these specific examples correspond to the water-soluble reactive dye (DA).

For example, structures of C. I. Reactive Black 5, C. I. Reactive Yellow 145, C. I. Reactive Orange 72, and C. I. Reactive Red 195 are as follows.

Hereinafter, "C. I. " may be omitted.

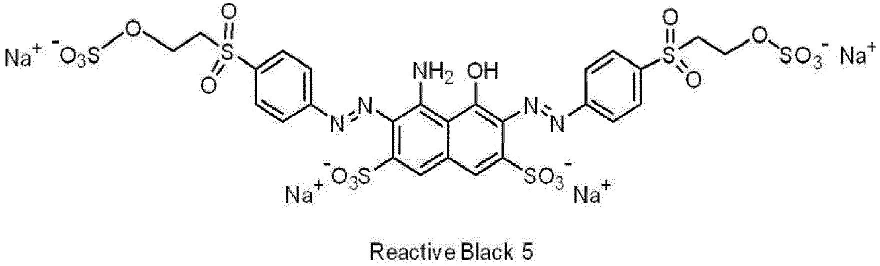

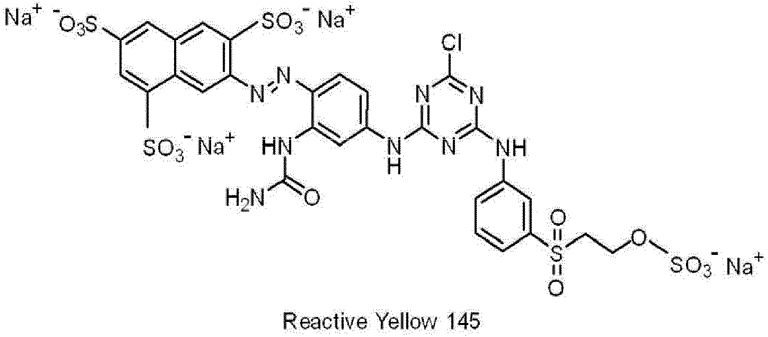

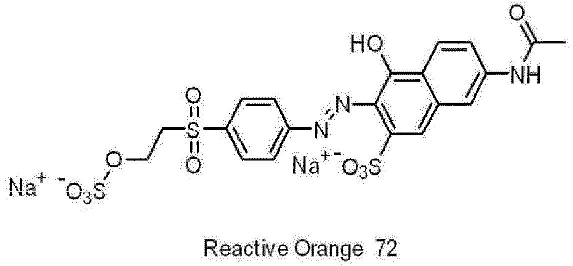

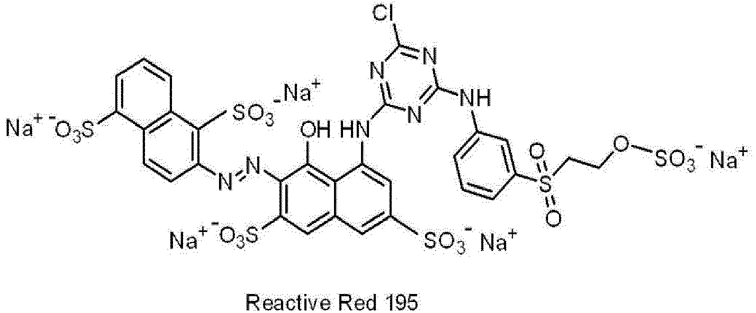

### -Making Water-Soluble Reactive Dye Oil-Soluble-

As described above, the water-soluble reactive dye is made oil-soluble by modifying the water-soluble reactive dye with an alkyl group having 4 or more carbon atoms.

Here, "modifying the water-soluble reactive dye with an alkyl group having 4 or more carbon atoms" is preferably performed by replacing a part of the reactive group (preferably, -OSO₃⁻Xb⁺ in the reactive group (R1)) in the water-soluble reactive dye with a group containing an alkyl group having 4 or more carbon atoms.

The number of carbon atoms of the whole group containing an alkyl group having 4 or more carbon atoms is preferably 4 to 60, more preferably 4 to 50, even more preferably 4 to 30, and much more preferably 4 to 25.

Examples of the group containing an alkyl group having 4 or more carbon atoms include a secondary amino group, a tertiary amino group, an alkoxy group which may be substituted, and a thioalkyl group which may be substituted.

The group containing an alkyl group having 4 or more carbon atoms is preferably a secondary or tertiary amino group since it has excellent reactivity to oil-solubilization and can further suppress the formation of water-soluble by-products.

### -Acid Dye-

The acid dye which is another aspect of the raw material of the oil-soluble dye (D) is preferably a dye containing an anion including a dye skeleton and a counter cation.

The acid dye is preferably the following acid dye (DB).

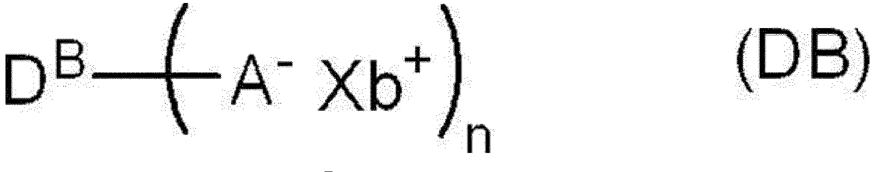

In the acid dye (DB), D^{B} represents an n-valent organic group having a dye skeleton, A⁻ represents an anionic group, Xb⁺ represents a hydrogen ion (H⁺) or an alkali metal ion as a counter cation, and n represents an integer of 1 or greater.

Preferable aspects of D^{B}, A⁻, Xb⁺, and n in the acid dye (DB) are the same as those of D^{A}, A⁻, Xa⁺, and n in the water-soluble reactive dye (DA), respectively.

As the acid dye, dyes appropriately selected from acid dyes in which the word "Acid" is used in the color index (C. I. ) number can be used.

Specific examples of the acid dye include;
C. I. Acid Black 1, 2, 3, 24, 24:1, 26, 31, 50, 52, 52:1, 58, 60, 63, 63S, 107, 109, 112, 119, 132, 140, 155, 172, 187, 188, 194, 207, 222;
C. I. Acid Yellow 1, 3, 6, 11, 17, 18, 19, 23, 25, 36, 38, 40, 40:1, 42, 44, 49, 59, 59:1, 61, 65, 67, 72, 73, 79, 99, 104, 159, 169, 176, 184, 193, 200, 204, 207, 215, 219, 219:1, 220, 230, 232, 235, 241, 242, 246;
C. I. Acid Orange 3, 7, 8, 10, 19, 22, 24, 51, 51S, 56, 67, 74, 80, 86, 87, 88, 89, 94, 95, 107, 108, 116, 122, 127, 140, 142, 144, 149, 152, 156, 162, 166, 168;
C. I. Acid Red 1, 6, 8, 9, 13, 18, 27, 35, 37, 52, 54, 57, 73, 82, 88, 97, 97:1, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415, 447;
C. I. Acid Vioret 17, 19, 21, 42, 43, 47, 48, 49, 54, 66, 78, 90, 97, 102, 109, 126;
C. I. Acid Blue 1, 7, 9, 15, 23, 25, 40, 61:1, 62, 72, 74, 80, 83, 90, 92, 103, 104, 112, 113, 114, 120, 127, 127:1, 128, 129, 138, 140, 142, 156, 158, 171, 182, 185, 193, 199, 201, 203, 204, 205, 207, 209, 220, 221, 224, 225, 229, 230, 239, 258, 260, 264, 277:1, 278, 279, 280, 284, 290, 296, 298, 300, 317, 324, 333, 335, 338, 342, 350;
C. I. Acid Green 9, 12, 16, 19, 20, 25, 27, 28, 40, 43, 56, 73, 81, 84, 104, 108, 109; and
C. I. Acid Brown 2, 4, 13, 14, 19, 28, 44, 123, 224, 226, 227, 248, 282, 283, 289, 294, 297, 298, 301, 355, 357, 413.

The structure of C. I. Acid Black 1 (hereinafter, "C. I. " may be omitted), which is one specific example of the acid dye, is as follows.

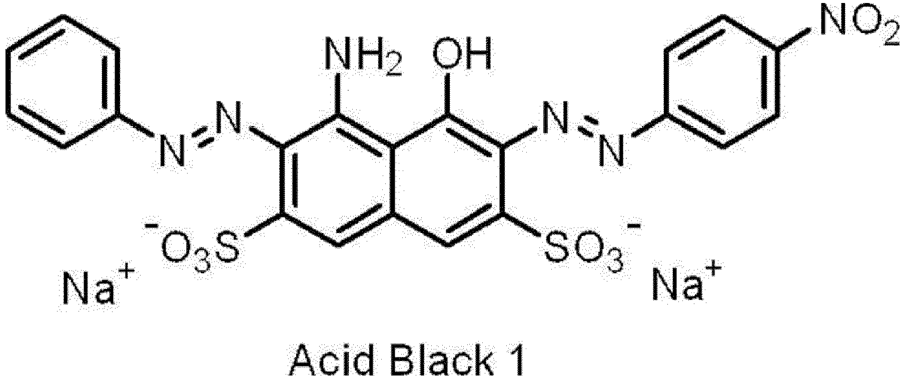

### -Making Acid Dye Oil-Soluble-

The acid dye is made oil-soluble by exchanging the counter cation in the acid dye with an organic cation containing an alkyl group having 4 or more carbon atoms.

In the present disclosure, "exchanging the counter cation in the acid dye with an organic cation containing an alkyl group having 4 or more carbon atoms" means that the counter cation in the acid dye is exchanged with an organic cation containing an alkyl group having 4 or more carbon atoms by a counter cation exchange reaction.

The number of carbon atoms of the whole organic cation containing an alkyl group having 4 or more carbon atoms is preferably 4 to 60, more preferably 4 to 50, even more preferably 4 to 30, and much more preferably 4 to 25.

The organic cation containing an alkyl group having 4 or more carbon atoms is preferably an organic ammonium ion containing an alkyl group having 4 or more carbon atoms.

The oil-soluble dye (D) is preferably a dye obtained by modifying a water-soluble reactive dye with an alkyl group having 4 or more carbon atoms from the viewpoint of a further improvement in the optical density of an image.

The molecular weight of the oil-soluble dye (D) is not particularly limited, and preferably 2,000 or less, and more preferably 1,500 or less.

The lower limit of the molecular weight of the oil-soluble dye (D) depends on the skeleton of the dye, and is, for example, 600 or greater, and more preferably 700 or greater.

### (Manufacturing Method of Oil-Soluble Dye (D))

The following method (hereinafter, referred to as the manufacturing method (D)) is suitable as a method of manufacturing the oil-soluble dye (D).

The manufacturing method (D) has
a step of obtaining an oil-soluble dye by a method (1) of reacting a water-soluble reactive dye with a primary amine compound containing a group containing an alkyl group having 4 or more carbon atoms, a secondary amine compound containing a group containing an alkyl group having 4 or more carbon atoms, a hydroxy compound containing a group containing an alkyl group having 4 or more carbon atoms, or a thiol compound containing a group containing an alkyl group having 4 or more carbon atoms, or a method (2) of reacting an acid dye with a salt containing an organic cation containing an alkyl group having 4 or more carbon atoms.

The manufacturing method (D) may optionally have other steps.

The oil-soluble dye obtained in the step of obtaining the oil-soluble dye corresponds to the above-described oil-soluble dye (D).

A preferable number of carbon atoms of the "alkyl group having 4 or more carbon atoms" in each compound used in the step of obtaining the oil-soluble dye is as described above.

Hereinafter, the methods (1) and (2) in the step of obtaining the oil-soluble dye will be described.

### -Method (1)-

In the method (1), the above-described oil-soluble dye (D) is obtained by making a water-soluble reactive dye oil-soluble (that is, the water-soluble reactive dye is modified with an alkyl group having 4 or more carbon atoms) as described below.

In the method (1),
in a case where a water-soluble reactive dye and
a primary amine compound containing a group containing an alkyl group having 4 or more carbon atoms are reacted,
as the above-described oil-soluble dye (D),
an oil-soluble dye (for example, d-4 to d-6 in examples to be described later) having a structure in which a part of the reactive group in the water-soluble reactive dye is replaced with a secondary amino group containing a group containing an alkyl group having 4 or more carbon atoms is obtained.

The number of carbon atoms of the whole primary amine compound containing a group containing an alkyl group having 4 or more carbon atoms is preferably 4 to 60, more preferably 4 to 50, even more preferably 4 to 30, and much more preferably 4 to 25.

In the method (1),
in a case where a water-soluble reactive dye and
a secondary amine compound containing a group containing an alkyl group having 4 or more carbon atoms are reacted,
as the above-described oil-soluble dye (D),
an oil-soluble dye (for example, d-7 to d-10 in examples to be described later) having a structure in which a part of the reactive group in the water-soluble reactive dye is replaced with a tertiary amino group containing a group containing an alkyl group having 4 or more carbon atoms is obtained.

The number of carbon atoms of the whole secondary amine compound containing a group containing an alkyl group having 4 or more carbon atoms is preferably 4 to 60, more preferably 4 to 50, even more preferably 4 to 30, and much more preferably 4 to 25.

In the method (1),
in a case where a water-soluble reactive dye and
a hydroxy compound containing a group containing an alkyl group having 4 or more carbon atoms are reacted,
as the above-described oil-soluble dye (D),
an oil-soluble dye (for example, d-2 in examples to be described later) having a structure in which a part of the reactive group (preferably, -OSO₃⁻Xb⁺ in the reactive group (R1), and the same hereinafter) in the water-soluble reactive dye is replaced with a monovalent organic group consisting of a group containing an alkyl group having 4 or more carbon atoms and an ether bond (-O-) is obtained.

The number of carbon atoms of the whole hydroxy compound containing a group containing an alkyl group having 4 or more carbon atoms is preferably 4 to 60, more preferably 4 to 50, even more preferably 4 to 30, and much more preferably 4 to 25.

In the method (1),
in a case where a water-soluble reactive dye and
a thiol compound containing a group containing an alkyl group having 4 or more carbon atoms are reacted,
as the above-described oil-soluble dye (D),
an oil-soluble dye (for example, d-3 in examples to be described later) having a structure in which a part of the reactive group in the water-soluble reactive dye is replaced with a monovalent organic group consisting of a group containing an alkyl group having 4 or more carbon atoms and a thioether bond (-S-) is obtained.

The number of carbon atoms of the whole thiol compound containing a group containing an alkyl group having 4 or more carbon atoms is preferably 4 to 60, more preferably 4 to 50, even more preferably 4 to 30, and much more preferably 4 to 25.

The reaction temperature of the reaction in the method (1) is, for example, 40°C to 100°C, preferably 40°C to 90°C, more preferably 50°C to 90°C, and even more preferably 50°C to 80°C.

The reaction time of the reaction in the method (1) is, for example, 0.3 hours to 8 hours, preferably 0.5 hours to 6 hours, and more preferably 1 hour to 4 hours.

The reaction in the method (1) is preferably performed in an organic solvent as a reaction solvent.

Examples of the organic solvent include ethyl acetate and methyl ethyl ketone.

In a case where the reaction in the method (1) is performed in a reaction solvent, water is preferably added to the obtained reaction liquid to precipitate a product (that is, oil-soluble dye).

### -Method (2)-

In the method (2), an acid dye and a salt containing an organic cation containing an alkyl group having 4 or more carbon atoms are reacted to replace a counter cation in the acid dye with an organic cation containing an alkyl group having 4 or more carbon atoms. Accordingly, the acid dye is made oil-soluble, and the above-described oil-soluble dye (D) is obtained.

The number of carbon atoms of the whole salt containing an organic cation containing an alkyl group having 4 or more carbon atoms is preferably 4 to 60, more preferably 4 to 50, even more preferably 4 to 30, and much more preferably 4 to 25.

The anion in the salt containing an organic cation containing an alkyl group having 4 or more carbon atoms is preferably a halide ion (for example, Cl⁻, Br⁻).

Preferable aspects (reaction temperature, reaction time, reaction solvent, and the like) of reaction conditions in the method (2) are the same as those of the reaction conditions in the method (1).

In the step of obtaining the oil-soluble dye, the oil-soluble dye is preferably obtained by the method (1) from the viewpoint of a further improvement in the optical density of an image.

### (Preferable Aspects of Oil-Soluble Dye (D))

One preferable aspect of the above-described oil-soluble dye (D) is an oil-soluble dye (D1) represented by Formula (D1).

The oil-soluble dye (D1) contains a dye skeleton in Reactive Black 5 which is a water-soluble reactive dye and a dye skeleton in Acid Black 1 which is an acid dye.

Therefore, the oil-soluble dye (D1) in the colored resin particle dispersion according to the first aspect can be obtained by making Reactive Black 5 or Acid Black 1 oil-soluble.

However, in the colored resin particle dispersion according to the second aspect to be described later, the oil-soluble dye (D1) is not limited to that obtained by making Reactive Black 5 or Acid Black 1 oil-soluble.

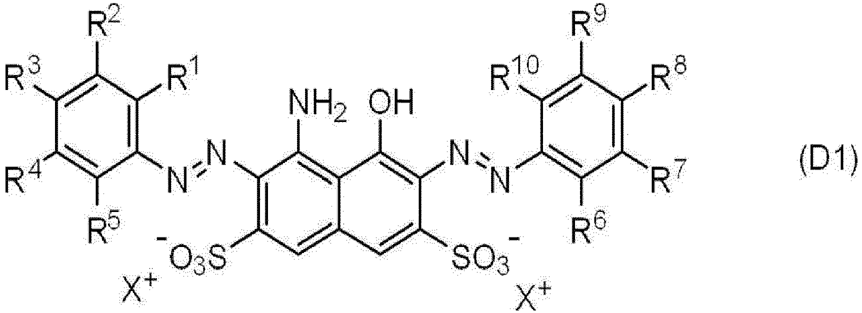

In Formula (D1),
R¹ to R¹⁰ each independently represent a hydrocarbon group having 1 to 60 carbon atoms which may contain an oxygen atom, a nitrogen atom, a sulfur atom, or a chlorine atom, a hydrogen atom, a chlorine atom, a nitro group, an amino group, a sulfo group, or a salt of a sulfo group, and
two X⁺'s represent an inorganic cation or an organic cation.

At least one of a condition that at least one of R¹, ..., or R¹⁰ is a group containing an alkyl group having 4 or more carbon atoms, or a condition that at least one of two X⁺'s is an organic cation containing an alkyl group having 4 or more carbon atoms is satisfied.

In Formula (D1), the hydrocarbon group having 1 to 60 carbon atoms which may contain an oxygen atom, a nitrogen atom, a sulfur atom, or a chlorine atom, represented by each of R¹ to R¹⁰, means an organic group having a total carbon number of 1 to 60 which contains a carbon atom and a hydrogen atom, and may contain an oxygen atom, a nitrogen atom, a sulfur atom, or a chlorine atom.

The hydrocarbon group which may contain an oxygen atom, a nitrogen atom, a sulfur atom, or a chlorine atom represented by each of R¹ to R¹⁰ may be a hydrocarbon group containing no oxygen atom, nitrogen atom, sulfur atom, and chlorine atom.

Examples of the hydrocarbon group containing no oxygen atom, nitrogen atom, sulfur atom, and chlorine atom include an alkyl group, an alkenyl group, an alkynyl group, an aryl group, an aralkyl group, and an alkylaryl group.

The concept of a hydrocarbon group containing an oxygen atom includes, for example, a hydroxyalkyl group, an alkoxy group, an alkoxyalkyl group, an alkylcarbonyl group, and an alkylcarbonyloxy group.

The concept of a hydrocarbon group containing a nitrogen atom includes, for example, an alkylamino group (that is, monoalkylamino group or dialkylamino group), and an alkylaminoalkyl group.

The concept of a hydrocarbon group containing a sulfur atom includes, for example, a thiolalkyl group and an alkylthio group.

The concept of a hydrocarbon group containing an oxygen atom and a sulfur atom includes, for example, an alkylsulfonyl group, an arylsulfonyl group, an alkoxyalkylthio group, an alkylthioalkylsulfonyl group, and an alkoxyalkylsulfonyl group.

The concept of a hydrocarbon group containing an oxygen atom, a nitrogen atom, and a sulfur atom includes, for example, an alkoxyalkylaminoalkylsulfonyl group and an alkylaminoalkylsulfonyl group.

The concept of a hydrocarbon group containing a chlorine atom includes a group in which the hydrogen atom in the above-described specific example is replaced with a chlorine atom.

The number of carbon atoms of the hydrocarbon group having 1 to 60 carbon atoms which may contain an oxygen atom, a nitrogen atom, a sulfur atom, or a chlorine atom, represented by each of R¹ to R¹⁰, is preferably 1 to 50.

The hydrocarbon group having 1 to 60 carbon atoms which may contain an oxygen atom, a nitrogen atom, a sulfur atom, or a chlorine atom, represented by each of R¹ to R¹⁰, is preferably a hydrocarbon group having 1 to 60 carbon atoms (more preferably 1 to 50) which may contain an oxygen atom a nitrogen atom, or a sulfur atom.

The hydrocarbon group having 1 to 60 carbon atoms which may contain an oxygen atom, a nitrogen atom, a sulfur atom, or a chlorine atom, represented by each of R¹ to R¹⁰, preferably contains a sulfonyl group.

The hydrocarbon group having 1 to 60 carbon atoms which may contain an oxygen atom, a nitrogen atom, a sulfur atom, or a chlorine atom, represented by each of R¹ to R¹⁰, is particularly preferably an alkylthioalkylsulfonyl group, an alkoxyalkylsulfonyl group, an alkoxyalkylaminoalkylsulfonyl group [that is, mono(alkoxyalkyl)aminoalkylsulfonyl group or di(alkoxyalkyl)aminoalkylsulfonyl group], or an alkylaminoalkylsulfonyl group [that is, monoalkylaminoalkylsulfonyl group or dialkylaminoalkylsulfonyl group].

R¹ to R¹⁰ each independently may be a hydrogen atom, a chlorine atom, a nitro group, an amino group, a sulfo group, or a salt of a sulfo group.

The salt of the sulfo group is preferably an alkali metal salt.
two X⁺'s represent an inorganic cation or an organic cation.

The inorganic cation is preferably a hydrogen ion (H⁺) or an alkali metal ion, more preferably an alkali metal ion, and even more preferably K⁺ or Na⁺.

The organic cation is preferably an organic ammonium ion.

Formula (D1) satisfies at least one of a condition that at least one (more preferably at least two) of R¹, ..., or R¹⁰ is a group containing an alkyl group having 4 or more carbon atoms, or a condition that at least one (more preferably two) of two X⁺'s is an organic cation containing an alkyl group having 4 or more carbon atoms.

Preferable aspects of the "group containing an alkyl group having 4 or more carbon atoms" and the "organic cation containing an alkyl group having 4 or more carbon atoms" in Formula (D1) are as described in the description of the oil-soluble dye (D).

A preferable aspect of Formula (D1) is that at least one of R¹, ..., or R¹⁰ is a group containing an alkyl group having 4 or more carbon atoms, and two X⁺'s each independently are K⁺ or Na⁺ from the viewpoint of a further improvement in the optical density of an image.

The oil-soluble dye (D1) is preferably an oil-soluble dye (D2) represented by Formula (D2) from the viewpoint of a further improvement in the optical density of an image.

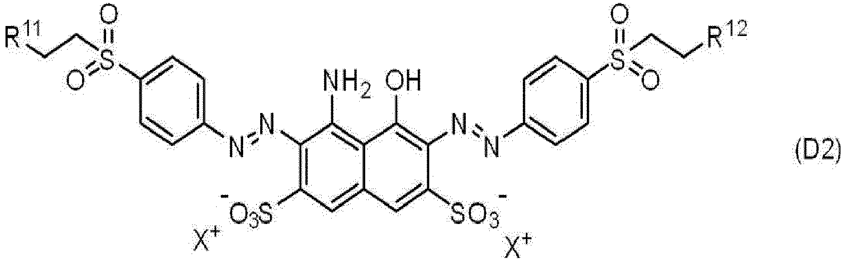

In Formula (D2),
R¹¹ and R¹² each independently represent a hydrocarbon group having 1 to 50 carbon atoms which may contain an oxygen atom, a nitrogen atom, or a sulfur atom, and
two X⁺'s represent an inorganic cation or an organic cation.

At least one of a condition that at least one (more preferably two) of R¹¹ or R¹² is a group containing an alkyl group having 4 or more carbon atoms, or a condition that at least one (more preferably two) of two X⁺'s is an organic cation containing an alkyl group having 4 or more carbon atoms is satisfied.

As preferable aspects of the groups and cations in Formula (D2), the preferable aspects of the groups and cations in Formula (D1) can be appropriately referred to.

A preferable aspect of Formula (D2) is that at least one (more preferably two) of R¹¹ or R¹² is a group containing an alkyl group having 4 or more carbon atoms, and two X⁺'s each independently are K⁺ or Na⁺ from the viewpoint of a further improvement in the optical density of an image.

The oil-soluble dye (D1) is more preferably an oil-soluble dye (D3) represented by Formula (D3) from the viewpoint of a further improvement in the optical density of an image.

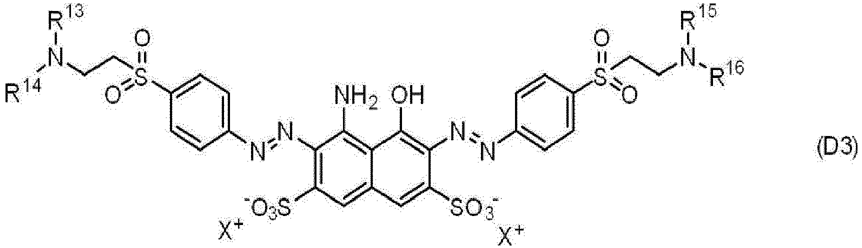

In Formula (D3),
R¹³ to R¹⁶ each independently represent a hydrocarbon group having 1 to 25 carbon atoms which may contain an oxygen atom, a nitrogen atom, or a sulfur atom, or a hydrogen atom, and
two X⁺'s represent an inorganic cation or an organic cation.

At least one of a condition that at least one (more preferably at least two) of R¹³ to R¹⁶ is a group containing an alkyl group having 4 or more carbon atoms, or a condition that at least one (more preferably two) of two X⁺'s is an organic cation containing an alkyl group having 4 or more carbon atoms is satisfied.

As preferable aspects of the groups and cations in Formula (D3), the preferable aspects of the groups and cations in Formula (D1) can be appropriately referred to.

A preferable aspect of Formula (D3) is that at least one (more preferably at least two) of R¹³ to R¹⁶ is a group containing an alkyl group having 4 or more carbon atoms, and two X⁺'s each independently are K⁺ or Na⁺ from the viewpoint of a further improvement in the optical density of an image.

### (Specific Examples of Oil-Soluble Dye (D))

Hereinafter, specific examples of the oil-soluble dye (D) will be described, and the oil-soluble dye (D) is not limited to these specific examples.

Specific examples of the oil-soluble dye (D) include d-1 to d-10 shown in examples to be described later. d-1 to d-10 are also included in specific examples of the oil-soluble dye (D1).

### (Other Oil-Soluble Dyes)

The colored resin particles contain the above-described oil-soluble dye (D), and may further optionally contain an oil-soluble dyes other than the oil-soluble dye (D).

As other oil-soluble dyes, dyes in which the word "Solvent" is used in the color index (C. I. ) number can be used.

Specific examples of the oil-soluble dye include;
C. I. Solvent Yellow 2, 14, 16, 21, 33, 43, 44, 56, 82, 85, 93, 98, 114, 131, 135, 157, 160, 163, 167, 176, 179, 185, and 189;
C. I. Solvent Red 8, 23, 24, 25, 49, 52, 109, 111, 119, 122, 124, 135, 146, 149, 150, 168, 169, 172, 179, 195, 196, 197, 207, 222, 227, 312, and 313;
C. I. Solvent Blue 3, 4, 5, 35, 36, 38, 44, 45, 59, 63, 67, 68, 70, 78, 83, 97, 101, 102, 104, 105, 111, and 122;
C. I. Solvent Orange 3, 14, 54, 60, 62, 63, 67, 86, and 107;
C. I. Solvent Violet 8, 9, 11, 13, 14, 26, 28, 31, 36, and 59;
C. I. Solvent Green 3, 5, 7, and 28;
C. I. Solvent Brown 53; and
C. I. Solvent Black 3, 5, 7, 27, 28, 29, and 34.

The ratio of the oil-soluble dye (D) to the oil-soluble dye in the colored resin particles is preferably 50 mass% to 100 mass%, more preferably 60 mass% to 100 mass%, and even more preferably 80 mass% to 100 mass%.

### (Polymer P)

The colored resin particles contain at least one type of polymer P containing a hydrophilic group.

The polymer P is not particularly limited as long as it contains a hydrophilic group.

### -Hydrophilic Group-

The polymer P contains at least one type of hydrophilic group.

As described above, the hydrophilic group of the polymer P contributes to the dispersion stability of the colored resin particles in the colored resin particle dispersion.

As the hydrophilic group, an anionic group or a nonionic group is preferable, and an anionic group is more preferable from the viewpoint of an excellent dispersion stability improvement effect.

For example, in a case where an anionic group and a nonionic group having the same molecular weight are compared each other, the anionic group has a more excellent dispersion stability improvement effect. That is, an anionic group (particularly preferably at least one selected from the group consisting of a carboxyl group and a salt of a carboxyl group) can sufficiently exhibit the dispersion stability improvement effect even in a case where the anionic group has a low molecular weight.

Examples of the nonionic group include a group having a polyether structure, and a monovalent group containing a polyalkyleneoxy group is preferable.

The anionic group may or may not be neutralized.

Examples of the unneutralized anionic group include a carboxyl group, a sulfo group, a sulfate group, a phosphonate group, and a phosphate group.

Examples of the neutralized anionic group include a salt of a carboxyl group, a salt of a sulfo group, a salt of a sulfate group, a salt of a phosphonate group, and a salt of a phosphate group.

In the present disclosure, the neutralized anionic group means an anionic group in the form of "salt" (for example, a salt of a carboxyl group (such as -COONa)).

Neutralization can be performed using, for example, an alkali metal hydroxide (for example, sodium hydroxide, potassium hydroxide, and the like) and an organic amine (for example, triethylamine, and the like).

From the viewpoint of dispersion stability, the hydrophilic group in the polymer P is preferably an anionic group,

more preferably at least one selected from the group consisting of a carboxyl group, a salt of a carboxyl group, a sulfo group, a salt of a sulfo group, a sulfate group, a salt of a sulfate group, a phosphonate group, a salt of a phosphonate group, a phosphate group, and a salt of a phosphate group, and
even more preferably at least one selected from the group consisting of a carboxyl group and a salt of a carboxyl group.

As the "salt" in the salt of the carboxyl group, the salt of the sulfo group, the salt of the sulfate group, the salt of the phosphonate group, and the salt of the phosphate group, an alkali metal salt or an organic amine salt is preferable, and an alkali metal salt is more preferable.

The alkali metal in the alkali metal salt is preferably K or Na.

In a case where the polymer P contains an anionic group (for example, at least one selected from the group consisting of a carboxyl group and a salt of a carboxyl group) as a hydrophilic group and the total number of millimoles of the anionic group (for example, a carboxyl group and a salt of a carboxyl group) contained in 1 g of the polymer P is defined as an acid value of the polymer P, the acid value of the polymer P is preferably 0.10 mmol/g to 2.00 mmol/g, and more preferably 0.30 mmol/g to 1.50 mmol/g from the viewpoint of dispersion stability.

In a case where the polymer P has an anionic group as a hydrophilic group, the degree of neutralization of the anionic group of the polymer P is preferably 50% to 100%, and more preferably 70% to 90%.

Here, the degree of neutralization refers to a ratio of "the number of neutralized anionic groups" to "the sum of the number of unneutralized anionic groups (for example, carboxyl group) and the number of neutralized anionic groups (for example, salt of carboxyl group) in the polymer P (that is, a ratio [number of neutralized anionic groups/(number of unneutralized anionic groups + number of neutralized anionic groups)]).

The degree of neutralization (%) of the polymer P can be measured by neutralization titration.

### -Glass Transition Temperature (Tg)-

The glass transition temperature (Tg) of the polymer P is preferably 60°C or lower, more preferably 50°C or lower, even more preferably 45°C or lower, and much more preferably 40°C or lower from the viewpoint of a further improvement in the optical density and rub resistance of an image.

The lower limit of Tg of the polymer P is not particularly limited, and examples of the lower limit of Tg include -50°C and -40°C.

In the present disclosure, the glass transition temperature (Tg) of the polymer P means a value measured using differential scanning calorimetry (DSC).

Specifically, the glass transition temperature is measured according to the method described in JIS K 7121 (1987) or JIS K 6240 (2011).

In the present disclosure, the glass transition temperature is an extrapolated glass transition starting temperature (hereinafter, may be referred to as Tig).

The method of measuring the glass transition temperature will be described in detail.

In the measurement of the glass transition temperature, after holding until the stabilization of the device at a temperature about 50°C lower than a predicted glass transition temperature, the device is heated at a heating rate of 20°C/min to a temperature about 30°C higher than a temperature at which the glass transition is completed, and a differential thermal analysis (DTA) or DSC curve is created.

The extrapolated glass transition starting temperature (Tig), that is, the glass transition temperature in the present disclosure is measured as a temperature at the intersection of a straight line formed by extending the base line on the low temperature side of the DTA or DSC curve toward the high temperature side and a tangent line drawn at the point where the gradient of the curve of a part where the glass transition is changed in a stepwise manner is maximized.

### -Weight-Average Molecular Weight (Mw)-

The weight-average molecular weight (Mw) of the polymer P is preferably 5,000 to 50,000, more preferably 6,000 to 40,000, even more preferably 8,000 to 30,000, and much more preferably 10,000 to 30,000 from the viewpoint of a further improvement in the dispersion stability of the colored resin particles.

In the present disclosure, the number-average molecular weight (Mn) and the weight-average molecular weight (Mw) mean values calculated in terms of polystyrene by gel permeation chromatography (GPC).

For example, TSKgel (registered trademark) Super HZM-H, TSKgel (registered trademark) Super HZ4000, and TSKgel (registered trademark) Super HZ200 (all manufactured by Tosoh Corporation) are used as columns to be used.

### -Type of Polymer P-

The type of the polymer P is not particularly limited.

Examples of the polymer P include a urethane resin, an acrylic resin, a polyester resin, a polyether resin, a polycaprolactone resin, a polycarbonate resin, a polybutadiene resin, a polyisoprene resin, and a polyolefin resin.

Here, the urethane resin means a resin containing at least one selected from the group consisting of a urethane bond, a urea bond, and a thiourethane bond.

Therefore, the urethane resin may contain a polyether chain, a polyester chain, a polycaprolactone chain, a polycarbonate chain, a polybutadiene chain, a polyisoprene chain, a polyolefin chain, and the like in addition to the above-described bonds.

The polymer P is preferably a urethane resin from the viewpoint of a further improvement in the optical density and rub resistance of an image.

In a more preferable aspect thereof from the above viewpoint, the polymer P includes
a structural unit represented by Formula (1) (hereinafter, also referred to as "unit (1)") and
a structural unit represented by Formula (2) (hereinafter, also referred to as "unit (2)").

### -Structural Unit Represented by Formula (1) (unit (1))-

In a case where the polymer P contains a structural unit represented by Formula (1) (hereinafter, also referred to as "unit (1)"), the polymer P may contain one or two or more types of units (1).

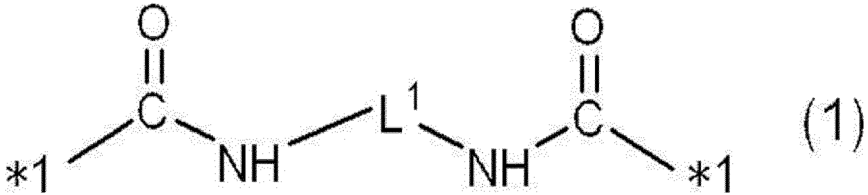

In Formula (1), L¹ represents a hydrocarbon group, and two ^{∗}1's each represent a bonding position.

The unit (1) is preferably bonded to at least a structural unit represented by Formula (2) (hereinafter, also referred to as "unit (2)").

The hydrocarbon group represented by L¹ is not particularly limited.

The hydrocarbon group represented by L¹ may be a linear hydrocarbon group, a branched hydrocarbon group, a hydrocarbon group containing an aromatic ring, or a hydrocarbon group containing an alicyclic structure.

Examples of the hydrocarbon group represented by L¹ include:
a divalent hydrocarbon group which is one selected from a group PI consisting of an alkylene group which may contain a branched structure and/or an alicyclic structure, an alkylene group which may contain a branched structure and/or an alicyclic structure, an alkenylene group which may contain a branched structure and/or an alicyclic structure, and an arylene group; and
a divalent hydrocarbon group obtained by bonding two or more selected from the group P1.

The number of carbon atoms of the hydrocarbon group represented by L¹ is preferably 1 to 20, more preferably 3 to 20, and even more preferably 4 to 12.

Examples of the compound for forming the unit (1) (hereinafter, also referred to as "compound for forming a unit (1)") include a diisocyanate compound having a structure in which each of two "-NH-(C=O)-^{∗}1" sites in the unit (1) is replaced with an isocyanate group (-NCO group).

Specific examples of the compound for forming a unit (1) will be shown below.

The compound for forming a unit (1) is not limited to the following specific examples.

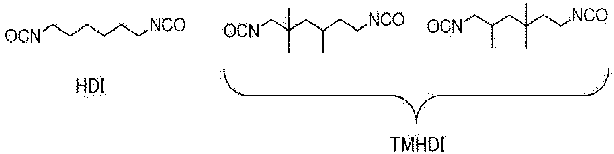

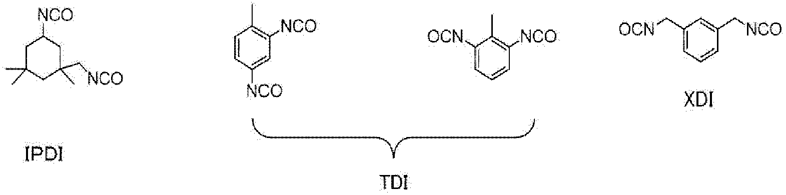

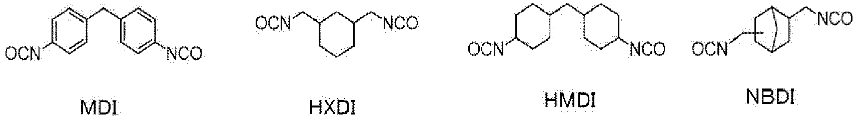

In addition, as a bifunctional isocyanate compound, bifunctional isocyanate compounds derived from the above specific examples can also be used. Examples thereof include DURANATE (registered trademark) D101, D201, and A101 (manufactured by Asahi Kasei Corporation).

### -Structural Unit Represented by Formula (2)-

In a case where the polymer P contains a structural unit represented by Formula (2) (hereinafter, also referred to as "unit (2)"), the polymer P may contain only one type or two or more types of units (2).

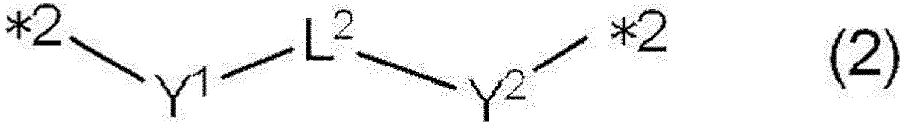

In Formula (2),
L² represents a hydrocarbon group having 2 to 50 carbon atoms which may contain an oxygen atom, a nitrogen atom, or a sulfur atom, or a polymer chain having a number-average molecular weight of 500 or greater which consists of a polyether chain, a polyester chain, a polycaprolactone chain, a polycarbonate chain, a polybutadiene chain, a polyisoprene chain, or a polyolefin chain,
Y¹ and Y² each independently represent -O-, -S-, or -NRz-,
Rz represents a hydrogen atom or a hydrocarbon group having 1 to 20 carbon atoms, and
two ^{∗}2's each represent a bonding position.

Here, the hydrocarbon group having 2 to 50 carbon atoms which contains an oxygen atom, a nitrogen atom, or a sulfur atom, included in the concept of the "hydrocarbon group having 2 to 50 carbon atoms which may contain an oxygen atom, a nitrogen atom, or a sulfur atom", means an organic group having 2 to 50 carbon atoms which has a structure in which at least one carbon atom in the hydrocarbon group consisting only of carbon atoms and hydrogen atoms is replaced with an oxygen atom, a nitrogen atom, or a sulfur atom.

The hydrocarbon group having 2 to 50 carbon atoms which may contain an oxygen atom, a nitrogen atom, or a sulfur atom, represented by L², (hereinafter, also simply referred to as "hydrocarbon group represented by L²") is preferably an unsubstituted or substituted alkylene group.

Examples of the substituent in the substituted alkylene group include an alkoxy group, an alkylcarbonyloxy group, an alkylthio group, an amino group, a monoalkylamino group, and a dialkylamino group.

The unit (2) is preferably bonded to at least the unit (1).

The number of carbon atoms of the hydrocarbon group represented by L² in Formula (2) is preferably 4 to 50, and more preferably 6 to 40 from the viewpoint of a further improvement in the optical density and rub resistance of an image.

From the viewpoint of a further improvement in the optical density and rub resistance of an image, the hydrocarbon group represented by L² is
preferably a chain hydrocarbon group having 4 to 25 carbon atoms and a branched structure which may contain an oxygen atom, a nitrogen atom, or a sulfur atom, and
more preferably an unsubstituted branched alkylene group having 6 to 25 carbon atoms, an alkoxylated branched alkylene group having 6 to 25 carbon atoms (that is, a branched alkylene group substituted with an alkoxy group), or an alkylcarbonyloxylated branched alkylene group having 6 to 25 carbon atoms (that is, a branched alkylene group substituted with an alkylcarbonyloxy group).

The number of carbon atoms of the alkoxy group in the alkoxylated branched alkylene group having 6 to 25 carbon atoms is preferably 1 to 23, and more preferably 4 to 22.

The number of carbon atoms of the alkylcarbonyloxy group in the alkylcarbonyloxylated branched alkylene group having 6 to 25 carbon atoms is preferably 2 to 23, and more preferably 6 to 22.

The hydrocarbon group represented by L² is also preferably an alkylene group having 2 or more carbon atoms substituted with a substituent A from the viewpoint of a further improvement in the optical density and rub resistance of an image.

The substituent A is preferably at least one selected from the group consisting of a linear alkyl group having 2 or more carbon atoms, a branched alkyl group having 3 or more carbon atoms, a linear alkoxy group having 2 or more carbon atoms, a branched alkoxy group having 3 or more carbon atoms, a linear alkoxyalkyl group having 2 or more carbon atoms, and a branched alkoxyalkyl group having 3 or more carbon atoms.

The number-average molecular weight (Mn) of the polymer chain represented by L² is 500 or greater.

The Mn of the polymer chain represented by L² is preferably 500 to 50,000, more preferably 1,000 to 40,000, even more preferably 1,000 to 30,000, much more preferably 1,000 to 10,000, and further preferably 1,000 to 5,000.

The polymer chain represented by L² consists of a polyether chain, a polyester chain, a polycaprolactone chain, a polycarbonate chain, a polybutadiene chain, a polyisoprene chain, or a polyolefin chain.

Examples of the polyether chain include a polyethylene glycol chain, a polypropylene glycol chain, and a polybutylene glycol chain.

Examples of the polyester chain include residues obtained by removing hydroxyl groups at both terminals from a compound (2-17) PEs to be described later.

Examples of the polycaprolactone chain include residues obtained by removing hydroxyl groups at both terminals from a compound (2-19) PCL to be described later.

Examples of the polycarbonate chain include residues obtained by removing hydroxyl groups at both terminals from a compound (2-18) PC to be described later.

L² is preferably a polymer chain having a number-average molecular weight of 500 or greater which consists of a polycarbonate chain or a polyether chain from the viewpoint of a further improvement in the rub resistance of an image and the storage stability of the colored resin particle dispersion.

An aspect in which L² is a polymer chain having a number-average molecular weight of 500 or greater which consists of a polycarbonate chain is particularly advantageous from the viewpoint of the rub resistance of an image.

An aspect in which L² is a polymer chain having a number-average molecular weight of 500 or greater which consists of a polyether chain is particularly advantageous from the viewpoint of the storage stability of the colored resin particle dispersion.

From the viewpoint of a further improvement in the rub resistance of an image and the storage stability of the colored resin particle dispersion, the polymer P preferably contains
a unit (2) in which L² in Formula (2) is a polymer chain having a number-average molecular weight of 500 or greater which consists of a polycarbonate chain, and
a unit (2) in which L² in Formula (2) is a polymer chain having a number-average molecular weight of 500 or greater which consists of a polyether chain.

The polycarbonate chain preferably contains an alkylene group having 2 to 12 (preferably 3 to 8, and more preferably 3 to 6) carbon atoms. More preferably, the polycarbonate chain is a residue obtained by removing hydroxyl groups at both terminals from a compound (2-18) PC to be described later.

The polyether chain is preferably a polyethylene glycol chain (a residue obtained by removing hydroxyl groups at both terminals from a compound (2-22) PEG to be described later) or a polypropylene glycol chain (a residue obtained by removing hydroxyl groups at both terminals from a compound (2-16) PPG to be described later).

In Formula (2), Y¹ and Y² each independently represent -O-, -S-, or -NRz-, and Rz represents a hydrogen atom or a hydrocarbon group having 1 to 20 carbon atoms.

Rz is preferably a hydrogen atom or an alkyl group having 1 to 10 carbon atoms, more preferably a hydrogen atom or an alkyl group having 1 to 6 carbon atoms, even more preferably a hydrogen atom, a methyl group, or an ethyl group, and much more preferably a hydrogen atom.

Each of Y¹ and Y² is preferably -O- or -S-, and more preferably -O-.

A compound for forming the unit (2) (hereinafter, also referred to as "compound for forming a unit (2)") is
preferably a compound having a structure in which "^{∗}2-Y¹-" and "-Y²-^{∗}2" in the unit (2) are respectively replaced with a hydroxyl group, a thiol group, or an amino group (for example, a diol compound, a dithiol compound, a diamine compound, and the like), and
more preferably a diol compound having a structure in which "^{∗}2-Y¹-" and "-Y²-^{∗}2" in the unit (2) are respectively replaced with a hydroxyl group.

The compound for forming a unit (2) which is a diol compound, provided to form a unit (2) in which L² is a polymer chain, is a polymer diol.

More specific examples of the polymer diol include a polyether diol, a polyester diol, a polycaprolactone diol, a polycarbonate diol, a polybutadiene diol, a polyisoprene diol, and a polyolefin diol.

Specific examples of the compound for forming a unit (2) will be shown below.

The compound for forming a unit (2) is not limited to the following specific examples.

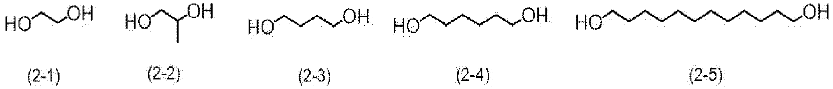

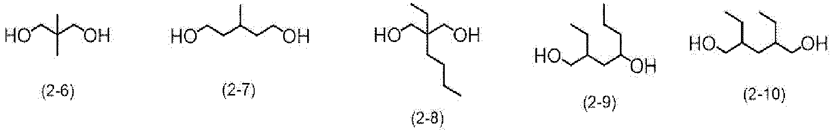

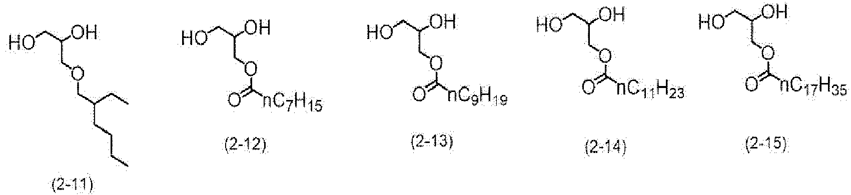

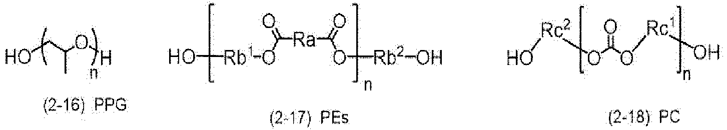

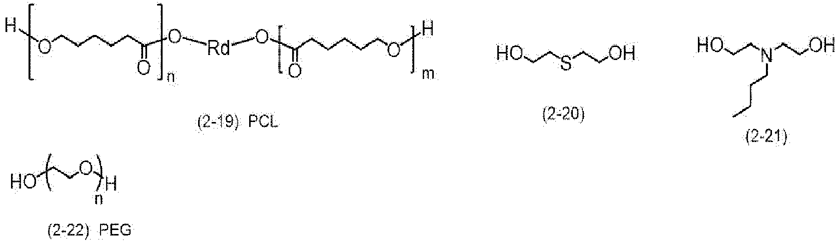

Among the compounds (2-12) to (2-15), nC₇H₁₅, nC₉H₁₉, nC₁₁H₂₃, and nC₁₇H₃₅ represent a normal heptyl group, a normal nonyl group, a normal undecyl group, and a normal heptadecyl group, respectively.

The compound (2-16) PPG is a polypropylene glycol, which is an example of the polyether diol, and n is the number of repetitions.

The compound (2-17) PEs is a polyester diol, n is the number of repetitions, and Ra, Rb¹, and Rb² each independently represent a divalent hydrocarbon group having 2 to 25 carbon atoms. The n Ra's in the compound (2-17) PEs may be the same or different. The n Rb¹'s in the compound (2-17) PEs may be the same or different.

The compound (2-18) PC is a polycarbonate diol, n is the number of repetitions, and Rc¹ and Rc² each independently represent an alkylene group having 2 to 12 (preferably 3 to 8, and more preferably 3 to 6) carbon atoms. The n Rc¹'s in the compound (2-18) PC may be the same or different.

The compound (2-19) PCL is a polycaprolactone diol, each of n and m is the number of repetitions, and Rd is an alkylene group having 2 to 25 carbon atoms.

The compound (2-22) PEG is a polyethylene glycol, which is an example of the polyether diol, and n is the number of repetitions.

Examples of the compound for forming a unit (2) include the following compounds in addition to the above-described compounds.

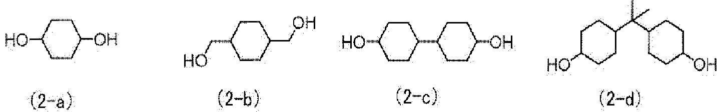

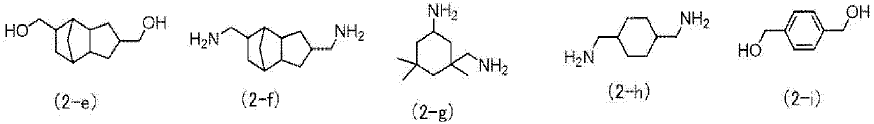

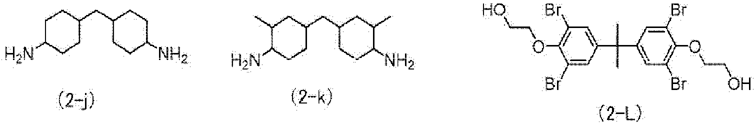

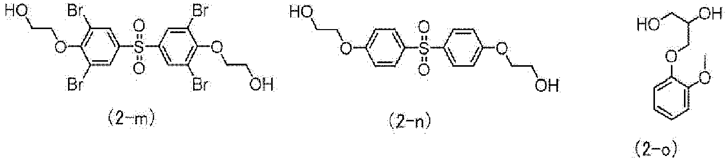

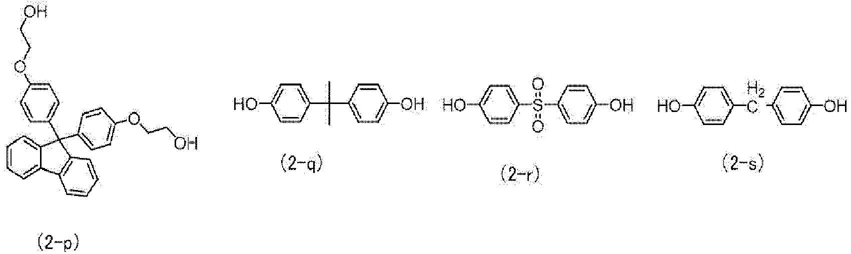

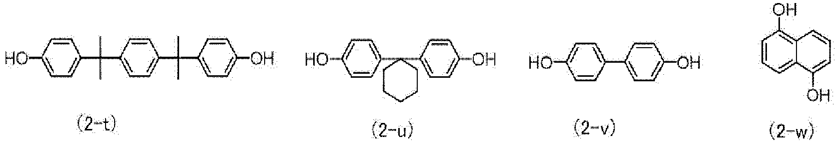

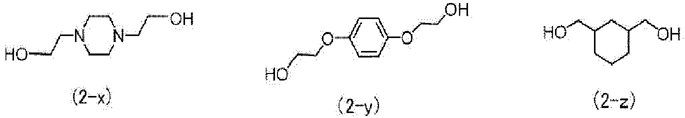

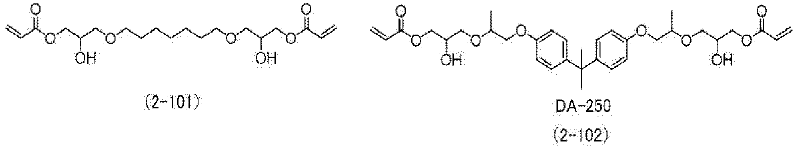

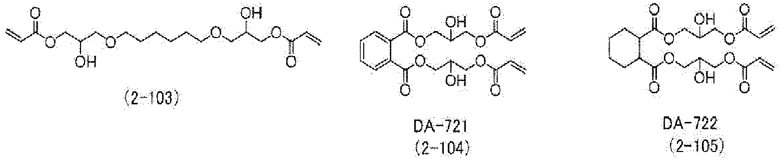

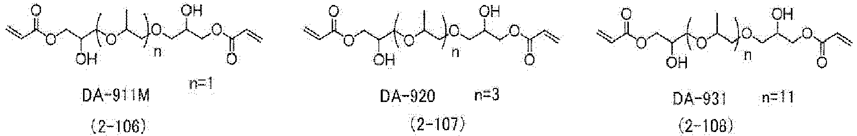

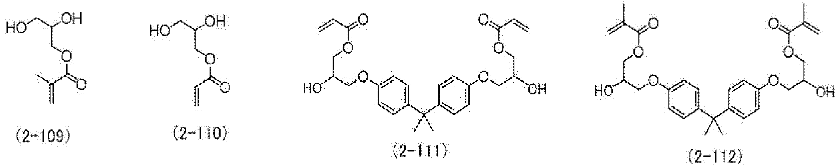

Examples of the compound for forming a unit (2) include, in addition to the above-described compounds, a polybutadiene diol (hereinafter, also referred to as "PBD"), a polyisoprene diol (hereinafter, also referred to as "PIP"), and a polyolefin diol.

As the polymer diol as the compound for forming a unit (2), a commercially available product may be used.

Regarding commercially available polymer diols, examples to be described later can be referred to.

Regarding commercially available polymer diols, paragraph 0111 of WO2016/152254A may also be referred to.

From the viewpoint of a further improvement in the optical density and rub resistance of an image, the total content of the units (1) and (2) in the polymer P is preferably 50 mass% or greater, more preferably 60 mass% or greater, and even more preferably 80 mass% or greater with respect to the total amount of the polymer P.

In the polymer P, the molar ratio of the unit (2) to the unit (1) (hereinafter, also referred to as "molar ratio [unit (2)/unit (1)]") is preferably 0.20 or greater and less than 1.00, more preferably 0.30 or greater and 0.90 or less, and even more preferably 0.50 or greater and 0.90 or less.

### -Structural Unit Having Hydrophilic Group-

The polymer P preferably contains at least one type of structural unit having a hydrophilic group.

Specific examples and preferable aspects of the hydrophilic group are as described above.

The structural unit having a hydrophilic group is preferably formed using a compound for introducing a hydrophilic group to be described later as a raw material.

The structural unit having a hydrophilic group is particularly preferably a structural unit represented by Formula (3) (hereinafter, also referred to as "unit (3)"), which is a structural unit having an anionic group.

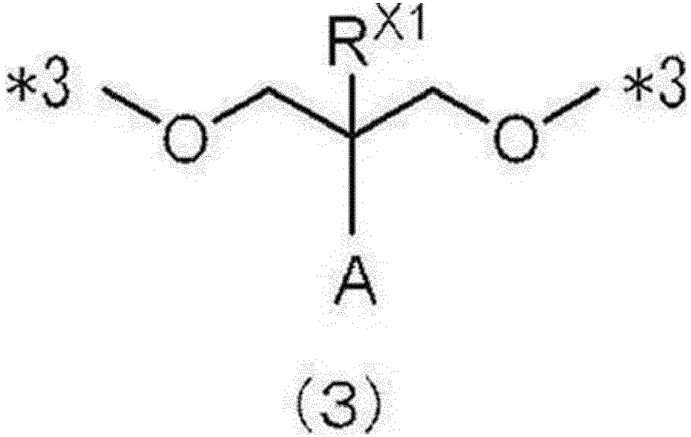

In Formula (3), R^{X1} represents a hydrogen atom or an alkyl group having 1 to 10 carbon atoms, A represents an anionic group, and two ^{∗}3's each represent a bonding position.

The unit (3) is preferably bonded to at least the unit (1).

Examples of the anionic group represented by A are the same as those exemplified for the anionic group described above.

The anionic group represented by A is preferably a carboxyl group or a salt of a carboxyl group.

The polymer P may contain a unit (3) in which A is a carboxyl group and a unit (3) in which A is a salt of a carboxyl group.

The content of the structural unit (for example, unit (3)) having a hydrophilic group with respect to the total amount of the polymer P is preferably 3 mass% to 30 mass%, and more preferably 5 mass% to 20 mass%.

The content of the structural unit having an anionic group with respect to the total amount of the polymer P may be adjusted in consideration of the acid value (mmol/g) of the polymer P.

### -Compound for Introducing Hydrophilic Group-

A hydrophilic group can be introduced into the polymer P using a compound for introducing a hydrophilic group.

Examples of the compound for introducing an anionic group among compounds for introducing a hydrophilic group include:
compounds in which a hydrogen atom is bonded to each of two ^{∗}3's in the unit (3); and
amino acids such as α-amino acids (specifically, lycine, alanine, arginine, asparagine, aspartic acid, cysteine, glutamine, glutamic acid, glycine, histidine, isoleucine, leucine, methionine, phenylalanine, proline, serine, threonine, tryptophan, tyrosine, and valine).

Examples of the compounds in which a hydrogen atom is bonded to each of two ^{∗}3's in the unit (3) include 2,2-dimethylolpropionic acid (DMPA) and 2,2-dimethylolbutanoic acid (DMBA).

As the compound for introducing an anionic group, an inorganic base such as sodium hydroxide or potassium hydroxide; an organic base such as triethylamine; or the like may be used to neutralize at least a part of the anionic group.

The anionic group may be neutralized in the course of forming the polymer P (for example, in the course of forming the colored resin particles) (see examples to be described later).

Among compounds for introducing a hydrophilic group, a compound having a polyether structure is preferable, and a compound having a polyoxyalkylene group is more preferable as a compound for introducing a nonionic group.

The polymer P may contain a structural unit other than the above-described structural units.

In a case where the polymer P contains a structural unit having a hydrophilic group, the total content of the unit (1), the unit (2), and the hydrophilic group is preferably 80 mass% or greater with respect to the total amount of the polymer P from the viewpoint of the optical density and the rub resistance of an image and the dispersion stability of the colored resin particles.

### -Preferable Aspects of Polymer P-

The polymer P preferably contains a structure of a reaction product of
a compound for forming a unit (1) (preferably, a diisocyanate compound having a structure in which each of two "-NH-(C=O)-^{∗}1" sites in the unit (1) is replaced with an isocyanate group (-NCO group)),
a compound for forming a unit (2) (preferably, a compound having a structure in which "^{∗}2-Y¹-" and "-Y²-^{∗}2" in the unit (2) are respectively replaced with a hydroxyl group, a thiol group, or an amino group), and
a compound for introducing a hydrophilic group (preferably a compound in which a hydrogen atom is bonded to each of two ^{∗}3's in the unit (3)).

### The polymer P preferably contains a urethane bond.

Examples of the urethane bond include a urethane bond formed by bonding the unit (1) and the unit (2) in which each of Y¹ and Y² is -O-, and a urethane bond formed by bonding the unit (1) and the unit (3).

The structure of the terminal of the main chain of the polymer P is not particularly limited, and the terminal group of the main chain of the polymer P is preferably an alkyl group having 1 to 20 carbon atoms (more preferably 1 to 10, and even more preferably 1 to 6).

The alkyl group having 1 to 20 carbon atoms (more preferably 1 to 10, and even more preferably 1 to 6) which is a terminal can be formed using, as a terminal sealing agent, an alcohol having 1 to 20 carbon atoms (more preferably 1 to 10, and even more preferably 1 to 6), a thioalcohol having 1 to 20 carbon atoms (more preferably 1 to 10, and even more preferably 1 to 6), a monoalkylamine having 1 to 20 carbon atoms (more preferably 1 to 10, and even more preferably 1 to 6), or the like.

In addition, the polymer P is preferably a chain polymer from the viewpoint of a further improvement in the optical density and rub resistance of an image.

Here, the chain polymer means a polymer containing no crosslinking structure.

The chain polymer may contain a cyclic structure. Needless to say, the chain polymer may contain a branched structure.

The content of the polymer P in the colored resin particles is preferably 10 mass% or greater, more preferably 20 mass% or greater, and even more preferably 30 mass% or greater with respect to the solid content of the colored resin particles from the viewpoint of a further improvement in the optical density and rub resistance of an image.

The content of the polymer P in the colored resin particles is preferably 90 mass% or less, more preferably 80 mass% or less, even more preferably 70 mass% or less, and much more preferably 60 mass% or less with respect to the solid content of the colored resin particles from the viewpoint of a further improvement in the optical density of an image.

In the present disclosure, in a case where the colored resin particles contain a solvent (for example, an oily organic solvent to be described later, and the same hereinafter), the solid content of the colored resin particles means a total amount excluding the amount of the solvent, and in a case where the colored resin particles contain no solvent, the solid content means a total amount of the colored resin particles.

In the present disclosure, in a case where the colored resin particles contain a solvent, the solids of the colored resin particles mean all the components excluding the solvent, and in a case where the colored resin particles contain no solvent, the solids mean all the components of the colored resin particles.

A preferable aspect of the synthesis method of the polymer P includes reacting the compound for forming a unit (1), the compound for forming a unit (2), and a compound for introducing a hydrophilic group in the presence of an oily organic solvent to be described later.

In addition, by the synthesis method of this aspect, a polymer in which an anionic group as a hydrophilic group is not neutralized may be synthesized, a colored resin particle dispersion may be prepared using the polymer as one of raw materials, and the anionic group of the polymer may be neutralized in the preparation step to form the polymer P.

The content of the oil-soluble dye in the colored resin particles is preferably 10 mass% or greater, more preferably 20 mass% or greater, even more preferably 30 mass% or greater, and much more preferably 40 mass% or greater with respect to the solid content of the colored resin particles from the viewpoint of a further improvement in the optical density of an image.

The content of the oil-soluble dye in the colored resin particles is preferably 90 mass% or less, more preferably 80 mass% or less, and even more preferably 70 mass% or less with respect to the solid content of the colored resin particles from the viewpoint of a further improvement in the optical density and rub resistance of an image.

The mass ratio of the content of the polymer P to the content of the oil-soluble dye (hereinafter, also referred to as "mass ratio [P/dye]") is preferably 0.10 to 4.00, more preferably 0.10 to 2.50, even more preferably 0.20 to 2.50, much more preferably 0.20 to 1.50, and further preferably 0.25 to 1.00 from the viewpoint of a further improvement in the optical density of an image.

### (Other Components)

Optionally, the colored resin particles may or may not contain a component other than the polymer P and the oil-soluble dye.

The total content of the polymer P and the oil-soluble dye in the colored resin particles is preferably 80 mass% or greater with respect to the solid content of the colored resin particles from the viewpoint of a further improvement in the optical density and rub resistance of an image.

The solid content of the colored resin particles is preferably 80 mass% or greater with respect to the total amount of the colored resin particles from the viewpoint of a further improvement in the optical density and rub resistance of an image.

Examples of other components which can be contained in the colored resin particles include oily organic solvents.

In a case where the colored resin particles contain an oily organic solvent, only one type or two or more types of oily organic solvents may be contained.

The oily organic solvent refers to an organic solvent whose aqueous solubility at 20°C is 10 mass% or less.

The aqueous solubility of the oily organic solvent at 20°C is preferably 5 mass% or less, and more preferably 1 mass% or less. In a case where the aqueous solubility of the oily organic solvent at 20°C is 5 mass% or less, the oil (organic component) and the water are less likely to be mixed during emulsification, and thus the synthesis suitability and the stability of the colored resin particles are further improved.

As the oily organic solvent, any of a volatile oily organic solvent or a non-volatile oily organic solvent may be contained. Among these, a non-volatile oily organic solvent is more likely to be present in the colored resin particles.

Here, the volatile oily organic solvent means an oily organic solvent having a boiling point of lower than 100°C. Examples of the volatile oily organic solvent include ester-based solvents such as ethyl acetate and ketone-based solvents such as methyl ethyl ketone.

The non-volatile organic solvent means an oily organic solvent having a boiling point of higher than 100°C.

As the non-volatile oily organic solvent, an oily organic solvent having a boiling point of 180°C or higher is preferable from the viewpoint of exhibiting non-volatility during the reaction and of dispersion stability of the colored resin particle dispersion or the ink during storage.

In the present disclosure, the boiling point is a value of the boiling point under standard conditions (1 atm, 25°C). 1 atm equals 101.325 kPa.

Specific examples of the non-volatile oily organic solvent include non-halogen phosphate esters (for example, TCP manufactured by DAIHACHI CHEMICAL INDUSTRY CO., LTD.), alkyl group-substituted aromatic compounds (for example, alkene KS-41 manufactured by JXTG Energy Corporation and KMC500 manufactured by Kureha Chemical Industry Co., Ltd.), long-chain alkyl group-substituted ester compounds (for example, methyl laurate KS-33 manufactured by NOF Corporation and tris(2-ethylhexanoic acid)glycerol manufactured by FUJIFILM Wako Pure Chemical Corporation), dibasic acid esters (for example DBE manufactured by INVISTA, and dimethyl succinate, dimethyl glutarate, and diisopropyl succinate manufactured by TOKYO CHEMICAL INDUSTRY), and alkylene glycol derivatives (for example, ethylene glycol monobutyl ether acetate, diethylene glycol monobutyl ether acetate, diethylene glycol dibutyl ether, and diethylene glycol dibenzoate manufactured by TOKYO CHEMICAL INDUSTRY).

From the viewpoint of solubility of the dye represented by Formula (M-A), DBE, dimethyl succinate, dimethyl glutarate, diisopropyl succinate, tris(2-ethylhexanoic acid)glycerol, diethylene glycol monobutyl ether acetate, or diethylene glycol dibutyl ether is particularly preferable.

In a case where the colored resin particles contain an oily organic solvent, the content of the oily organic solvent is preferably 0.1 mass% to 20 mass%, more preferably 1 mass% to 15 mass%, and even more preferably 3 mass% to 10 mass% with respect to the solid content of the colored resin particles.

### (Volume Average Particle Diameter)

The volume average particle diameter of the colored resin particles is preferably 200 nm or less, more preferably 20 nm to 200 nm, and even more preferably 40 nm to 150 nm. In a case where the volume average particle diameter of the colored resin particles is 200 nm or less, the jetting property of an ink jet ink prepared is improved.

The volume average particle diameter of the colored resin particles mentioned here means a value measured using a particle size distribution measurement apparatus (for example, NANOTRAC UPAEX150, manufactured by Nikkiso Co., Ltd., trade name).

The colored resin particle dispersion according to the first aspect contains water and the above-described colored resin particles.

The colored resin particle dispersion according to the first aspect may or may not contain a component other than the water and the colored resin particles.

The total content of the water and the colored resin particles in the colored resin particle dispersion is preferably 80 mass% or greater with respect to the total amount of the colored resin particle dispersion from the viewpoint of a further improvement in the optical density and rub resistance of an image.

### <Example of Manufacturing Method of Colored Resin Particle Dispersion>

The manufacturing method of the colored resin particle dispersion according to the first aspect is not particularly limited.

Hereinafter, an example of the manufacturing method of the colored resin particle dispersion (hereinafter, also referred to as production method A") according to the first aspect will be shown.

The production method A includes
a step of preparing an oil phase component containing an oily organic solvent (that is, a volatile oily organic solvent and/or a non-volatile oily organic solvent), a polymer P or a polymer P before neutralization of an anionic group as a hydrophilic group, and an oil-soluble dye,
a step of preparing a water phase component containing water (and a neutralizing agent as necessary), and
an emulsification step of mixing the oil phase component and the water phase component and emulsifying the obtained mixture to obtain an emulsion.

In the production method A, due to the emulsification step, colored resin particles are formed, and the formed colored resin particles are dispersed in the water. Whereby, a colored resin particle dispersion in which the colored resin particles are dispersed in the water is obtained.

In a case where, as the oil phase component, an oil phase component containing the polymer P before neutralization of an anionic group as a hydrophilic group is used, and as the water phase component, a water phase component containing water and a neutralizing agent is used, at least a part of the anionic group in the polymer P before neutralization of the anionic group is neutralized in the emulsification step, and thus colored resin particles containing the polymer P containing the neutralized anionic group (for example, -COONa) are formed.

A basic compound such as sodium hydroxide, potassium hydroxide, or triethylamine can be used as the neutralizing agent.

In the emulsification step, the emulsification method is not particularly limited, and examples thereof include emulsification by an emulsification device (for example, a disperser) such as a homogenizer.

The rotation speed of the disperser in the emulsification is, for example, 5,000 rpm to 20,000 rpm, and preferably 10,000 rpm to 15,000 rpm. Here, rpm is an abbreviation for revolutions per minute.

The rotation time in the emulsification is, for example, 1 minute to 120 minutes, preferably 3 minutes to 60 minutes, more preferably 3 minutes to 30 minutes, and even more preferably 5 minutes to 15 minutes.

The emulsification in the emulsification step may be performed under heating.

By performing the emulsification under heating, the colored resin particles can be more efficiently formed.

In addition, by performing the emulsification under heating, at least a part of the oily organic solvent in the oil phase component is easily removed from the mixture.

In a case where the emulsification is performed under heating, the heating temperature is preferably 35°C to 70°C, and more preferably 40°C to 60°C.

The production method A may include a heating step of heating the emulsion or a mixture of the emulsion and water to remove at least a part of the oily organic solvent.

The heating temperature in the heating step is preferably 35°C to 70°C, and more preferably 40°C to 60°C.

### [Colored Resin Particle Dispersion (second aspect)]

A colored resin particle dispersion according to a second aspect of the present disclosure contains
water, and
colored resin particles containing a polymer P containing a hydrophilic group and an oil-soluble dye, and
the oil-soluble dye contains the above-described oil-soluble dye (D1).

The colored resin particle dispersion according to the second aspect is not limited to the condition that the oil-soluble dye (D1) corresponds to the "oil-soluble dye (D) obtained by modifying a water-soluble reactive dye with an alkyl group having 4 or more carbon atoms, or exchanging a counter cation in an acid dye with an organic cation containing an alkyl group having 4 or more carbon atoms" in the first aspect. That is, the raw materials and manufacturing method of the oil-soluble dye (D1) are not particularly limited.

Except for this, the colored resin particle dispersion according to the second aspect is the same as the colored resin particle dispersion according to the first aspect, and their preferable aspects are also the same.

The colored resin particle dispersion according to the first aspect and the colored resin particle dispersion according to the second aspect may have a conceptually overlapping portion.

That is, the oil-soluble dye (D1) in the colored resin particle dispersion according to the second aspect may correspond to the oil-soluble dye (D) in the first aspect.

Preferable aspects of the oil-soluble dye (D1) are as described in the description of the first aspect.

### [Ink]

An ink according to the embodiment of the present disclosure contains the above-described colored resin particle dispersion according to the embodiment of the present disclosure (that is, the colored resin particle dispersion according to the first aspect of the present disclosure, or the colored resin particle dispersion according to the second aspect of the present disclosure, and the same hereinafter).

In other words, the ink according to the embodiment of the present disclosure contains the respective components (at least the water and the colored resin particles) in the colored resin particle dispersion according to the embodiment of the present disclosure.

In the ink according to the embodiment of the present disclosure, the water content is, for example, 40 mass% or greater, preferably 50 mass% or greater, and more preferably 60 mass% or greater with respect to the total amount of the ink.

The upper limit of the water content depends on the amount of the solids in the ink, and is, for example, 90 mass% with respect to the total amount of the ink.

In the ink according to the embodiment of the present disclosure, the solid content of the colored resin particles is preferably 1 to 20 mass%, more preferably 1 to 15 mass%, and even more preferably 3 to 10 mass% with respect to the total amount of the ink.

### <Aqueous Organic Solvent>

The ink according to the embodiment of the present disclosure preferably contains at least one type of aqueous organic solvent.

Accordingly, the ink has excellent stability (that is, precipitation and the like are unlikely to occur), and also has an excellent jetting property in a case where the ink is used as an ink jet ink.

Here, the term "aqueous" in the aqueous organic solvent means that the amount of the solvent dissolved in 100 g of distilled water at 25°C is greater than 1 g.

The amount of the aqueous organic solvent dissolved is preferably 5 g or greater, more preferably 10 g or greater, and even more preferably 20 g or greater.

Examples of the aqueous organic solvent include alcohol-based solvents, amide-based solvents, nitrile-based solvents, polyalkylene glycol-based solvents, and polyalkylene glycol alkyl ether-based solvents, and alcohol-based solvents or amide-based solvents are preferable.

Examples of the aqueous organic solvent include methanol, ethanol, n-propanol, isopropanol, n-butanol, isobutanol, tert-butanol, trimethylolpropane, ethylene glycol, diethylene glycol, triethylene glycol, tetraethylene glycol, propylene glycol, butylene glycol, 1,2,6-hexanetriol, thioglycol, hexylene glycol, glycerin, diglycerin, 2-pyrrolidone, N-methyl-2-pyrrolidone, 1,5-pentanediol, 1,6-hexanediol, ethylene glycol monoethyl ether, ethylene glycol monobutyl ether, acetonitrile, polyethylene glycol (having a molecular weight of 400 to 800, for example), hydroxyethylpyrrolidone, hydroxypropylpyrrolidone, valerolactam, caprolactam, heptalactam, polyethylene glycol monomethyl ether (having a molecular weight of 400), polyethylene glycol monomethyl ether (having a molecular weight of 550), polyethylene glycol dimethyl ether (having a molecular weight of 500), tripropylene glycol, tetrapropylene glycol, polypropylene glycol (having a molecular weight of 400), polypropylene glycol (having a molecular weight of 600), and polypropylene glycol (having a molecular weight of 700).

The aqueous organic solvent contains
preferably at least one selected from the group consisting of trimethylolpropane, ethylene glycol, diethylene glycol, triethylene glycol, tetraethylene glycol, propylene glycol, glycerin, 2-pyrrolidone, 1,5-pentanediol, 1,6-hexanediol, and ethylene glycol monobutyl ether,
more preferably at least one selected from the group consisting of ethylene glycol, diethylene glycol, triethylene glycol, tetraethylene glycol, propylene glycol, glycerin, 2-pyrrolidone, and ethylene glycol monobutyl ether, and
even more preferably at least one selected from the group consisting of ethylene glycol, glycerin, 2-pyrrolidone, and tetraethylene glycol.

The content of the aqueous organic solvent in the ink is preferably 5 mass% to 50 mass%, more preferably 5 mass% to 40 mass%, and even more preferably 10 mass% to 30 mass% with respect to the total amount of the ink.

In a case where the content of the aqueous organic solvent is within the above range, the ink has excellent stability (that is, precipitation and the like are unlikely to occur), and also has an excellent jetting property in a case where the ink is used as an ink jet ink.

### <Crosslinking Agent>

The ink according to the embodiment of the present disclosure may further contain at least one type of crosslinking agent.

The crosslinking agent is preferably a compound having at least two crosslinkable groups.

The crosslinkable group of the crosslinking agent is preferably a carboxyl group, a hydroxyl group, a sulfonate group, an amide group, or the like.

Examples of the crosslinking agent include blocked isocyanate-based compounds, oxazoline-based compounds, and carbodiimide compounds.

Among these,
blocked isocyanate-based compounds in which a trimethylolpropane (TMP) adduct or isocyanurate of a diisocyanate (for example, hexamethylene diisocyanate (HDI), hydrogenated xylylene diisocyanate (H6XDI), isophorone diisocyanate (IPDI), or dicyclohexylmethane diisocyanate (H12MDI)) is blocked with a blocking agent; or carbodiimide compounds are preferable.

The blocking agent used for the blocked isocyanate-based compound is preferably diethyl malonate (DEM), diisopropylamine (DIPA), 1,2,4-triazole (TRIA), 3,5-dimethylpyrazole (DMP), or butanone oxime (MEKO) from the viewpoint of dissociation temperature.

The blocked isocyanate-based compounds can also be used as an oligomer in which a part of the isocyanate group thereof is reacted with a polyol, a polycarbonate, a polyester, a polyether, or the like.

As the carbodiimide compounds, crosslinking agents CARBODILITE E-02, E-03A, and E-05 (all are product names) for an aqueous resin manufactured by Nisshinbo Chemical Inc. are preferable, and E-05 is particularly preferable from the viewpoint of storage stability and reactivity.

The dissociation temperature of the crosslinking agent is preferably as low as possible from the viewpoint of crosslinking efficiency, but is preferably as high as possible from the viewpoint of storage stability.

The dissociation temperature is preferably 90°C to 180°C, more preferably 90°C to 120°C, and particularly preferably 110°C to 120°C from the viewpoint of balance between the crosslinking efficiency and the storage stability.

The crosslinking agent is preferably blended with the ink as what is water-soluble or self-emulsifiable by giving a hydrophilic group. In this state, the viscosity of the blended ink can be lowered, and excellent redispersibility can be obtained.

The crosslinking agent may be crosslinking agent particles.

The average particle diameter of the crosslinking agent particles is preferably 200 nm or less from the viewpoint of an improvement in the jetting property in an ink jet process.

A value of a volume average particle diameter (MV) measured using a particle size distribution measurement apparatus (NANOTRAC UPA EX150, manufactured by Nikkiso Co., Ltd., trade name) can be used as the average particle diameter mentioned here.

The crosslinking agent particles are not particularly limited, and examples thereof include ELASTRON BN-77 (blocked isocyanate, particle diameter: 19 nm, dissociation temperature: 120°C or higher, manufactured by DKS Co. Ltd.), ELASTRON BN-27 (blocked isocyanate, particle diameter: 108 nm, dissociation temperature: 180°C or higher, manufactured by DKS Co. Ltd.), DURANATE WM44-70G (blocked isocyanate, particle diameter: 42 nm, dissociation temperature: about 90°C, manufactured by Asahi Kasei Corporation), and TRIXENE AQUA BI200 (blocked isocyanate, particle diameter: 94 nm, dissociation temperature: 110°C to 120°C, manufactured by BAXENDEN).

In a case where the ink contains the crosslinking agent, the content of the crosslinking agent in the ink is preferably 0.1 mass% to 10 mass%, more preferably 0.5 mass% to 8 mass%, and even more preferably 1 mass% to 5 mass% with respect to the total amount of the ink.

### <Pigment>

The ink according to the embodiment of the present disclosure may further contain at least one type of pigment from the viewpoint of hue adjustment or an enhancement in the color density.

Examples of the pigment include:
Carbon Black, Aniline Black;
C. I. Pigment Yellow 3, 12, 53, 55, 74, 81, 83, 93, 94, 95, 97, 98, 100, 101, 104, 108, 109, 110, 117, 120, 128, 138, 153, 155, 180, and 185;
C. I. Pigment Red 112, 114, 122, 123, 146, 149, 166, 168, 170, 172, 177, 178, 179, 185, 190, 193, 202, 206, 209, and 219;
C. I. Pigment Violet 19 and 23;
C. I. Pigment Orange 36, 43, and 64;
C. I. Pigment Blue 15, 15:1, 15:2, 15:3, 15:4, 15:6, 16, 17:1, 56, 60, and 63; and
C. I. Pigment Green 36.

In a case where the ink according to the embodiment of the present disclosure contains a pigment, the content of the pigment in the ink is preferably 0.5 mass% to 10 mass%, more preferably 0.5 mass% to 8 mass%, and even more preferably 0.5 mass% to 5 mass% with respect to the total amount of the ink.

In the present disclosure, an aqueous dispersion of a pigment (also referred to as "aqueous pigment dispersion") in which a pigment is dispersed in water using a dispersant can also be used in the preparation of the ink. For example, the pigment dispersion described in JP2012-7148A can be used as the aqueous pigment dispersion. In addition, a commercially available product such as Pro-jet Black APD1000 (manufactured by Fujifilm Imaging Colorants) can be used as the aqueous pigment dispersion.

A self-dispersing pigment can also be used as the pigment.

The self-dispersing pigment is a pigment which is dispersible in water without using a dispersant. Examples of the self-dispersing pigment include those in which at least one of hydrophilic groups such as a carbonyl group, a hydroxyl group, a carboxyl group, a sulfo group, and a phosphate group or salts thereof is introduced to the surface of the pigment by a chemical bond, either directly or via another group.

The self-dispersing pigment is preferably self-dispersing carbon black.

Examples of the useable self-dispersing pigment include commercially available products such as self-dispersing carbon black CAB-O-JET 200, 300, and 400 (all manufactured by Cabot Corporation), BONJET CW-1 (500 µmol/g, as a carboxyl group) and CW-2 (470 µmol/g, as a carboxyl group) (all manufactured by Orient Chemical Industries Co., Ltd.), and Aqua-Black 162 (about 800 µmol/g, as a carboxyl group) of Tokai Carbon Co., Ltd.

As the pigment, either an aqueous dispersion of a pigment obtained by dispersing a pigment in water using a dispersant or a self-dispersing pigment can be preferably used.

### <Wax>

The ink according to the embodiment of the present disclosure may contain at least one type of wax.

Accordingly, the rub resistance of an image can be further improved.

The wax is preferably present in the form of particles in the ink according to the embodiment of the present disclosure.

The wax having a particle form is referred below to as "wax particles".

A dispersion in which a wax is dispersed in water is preferably used as the wax particles.

As the wax, polyethylene wax, paraffin wax, or carnauba wax is preferable.

The melting point of the wax is preferably in the range of 60°C to 120°C, and more preferably 60°C to 100°C from the viewpoint of an improvement in the stability and frictionality. It is possible to improve the stability of the printing ink by increasing the melting point, and not increasing the melting point higher than necessary is effective in improving the frictionality.

The melting point of the wax can be measured by a general melting point measuring machine.

The volume average particle diameter (MV) of the wax particles is preferably 0.3 µm or less, more preferably 0.2 µm or less, and particularly preferably 0.1 µm or less from the viewpoint of the jetting property in an ink jet process.

The volume average particle diameter can be measured in the same manner as in the case of the colored resin particles described above.

In a case where the ink according to the embodiment of the present disclosure contains wax, the content of the wax is preferably 0.1 mass% to 10 mass%, more preferably 0.5 mass% to 8 mass%, and even more preferably 1 mass% to 5 mass% with respect to the total amount of the ink.

As the wax particles, a commercially available product may be used.

Examples of the commercially available product include POLYLON L-787 (manufactured by CHUKYO YUSHI CO., LTD., polyethylene, nonion, melting point: 102°C, volume average particle diameter: 0.1 µm), HYDRIN-703 (manufactured by CHUKYO YUSHI CO., LTD., paraffin, anion, melting point: 75°C, volume average particle diameter: 0.1 µm), R108 (manufactured by CHUKYO YUSHI CO., LTD., paraffin, nonion, melting point: 66°C, volume average particle diameter: 0.2 µm), and Cellosol 524 (manufactured by CHUKYO YUSHI CO., LTD., carnauba, nonion, melting point: 83°C, volume average particle diameter: 0.07 µm).

### <Surfactant>

The ink according to the embodiment of the present disclosure may contain at least one type of surfactant.

The surfactant is not particularly limited, and known surfactants such as anionic surfactants, cationic surfactants, and nonionic surfactants can be used.

As the surfactant, a nonionic surfactant is preferable from the viewpoint of jetting property for a case where the ink is used as an ink jet ink, and an acetylene-based surfactant is particularly preferable.

Examples of commercially available products of the acetylene-based surfactant include SURFYNOL (registered trademark) series manufactured by Nissin Chemical Industry Co., Ltd. and OLFINE (registered trademark) series manufactured by Nissin Chemical Industry Co., Ltd.

In a case where the ink according to the embodiment of the present disclosure contains a surfactant, the content of the surfactant is preferably 0.1 mass% to 2.0 mass%, and more preferably 0.5 mass% to 2.0 mass% with respect to the total amount of the ink from the viewpoint of jetting property for a case where the ink is used as an ink jet ink.

### <Other Components>

The ink according to the embodiment of the present disclosure may contain a component other than the above-described components.

Examples of other components include dyes other than the oil-soluble dye, pigments, crosslinking agents, waxes, pH adjusters, fluorescent brighteners, surface tension adjusters, antifoaming agents, antidrying agents, lubricants, thickeners, ultraviolet absorbers, antifading agents, antistatic agents, matting agents, antioxidants, resistivity modifiers, rust inhibitors, reduction inhibitors, preservatives, fungicides, and chelating agents.

Regarding other components, the description in WO2017/131107A may be referred to.

### <Use>

There are no particular restrictions on the use of the ink according to the embodiment of the present disclosure.

The ink according to the embodiment of the present disclosure is used as, for example, an ink jet ink. In a case where the ink according to the embodiment of the present disclosure is used as an ink jet ink, the jetting property from an ink jet head is secured.

Furthermore, as described above, since the ink according to the embodiment of the present disclosure can form an image having excellent optical density and rub resistance on a fabric, the ink according to the embodiment of the present disclosure is suitable as a printing ink, and is particularly suitable as an ink jet textile printing ink.

In a case where the ink according to the embodiment of the present disclosure is used as an ink jet ink, the surface tension of the ink is preferably 20 mN/m to 70 mN/m, and more preferably 25 mN/m to 60 mN/m.

The surface tension mentioned here means a value measured at 25°C.

The surface tension can be measured by using, for example, an Automatic Surface Tensiometer CBVP-Z (manufactured by Kyowa Interface Science Co., Ltd.).

In a case where the ink according to the embodiment of the present disclosure is used as an ink jet ink, the viscosity of the ink is preferably 40 mPa·s or less, and more preferably 30 mPa·s or less.

The viscosity mentioned here is a value measured at 25°C.

As a viscometer, for example, a viscometer VISCOMETER TV-22 (manufactured by TOKI SANGYO CO., LTD.) can be used.

### [Ink Set]

The ink according to the embodiment of the present disclosure may be used alone or in the form of an ink set.

The ink set mentioned here is provided with two or more types of inks, and at least one of the two or more types of inks is an ink set which is the ink according to the embodiment of the present disclosure.

That is, the ink set may consist of two or more types of the inks according to the embodiment of the present disclosure, or may consist of one or more types of the inks according to the embodiment of the present disclosure and one or more types of other inks.

In addition, the ink set may further contain an aqueous pretreatment liquid to be described later.

Examples of the ink set include an ink set including a black ink, a yellow ink, a magenta ink, and a cyan ink, in which at least one ink of the ink set is the ink according to the embodiment of the present disclosure.

Among the aspects, an aspect in which the black ink is the ink according to the embodiment of the present disclosure is particularly preferable.

### [Ink Jet Textile Printing Method]

The ink according to the embodiment of the present disclosure can be used for image formation on any base material, and is particularly suitable for image formation on a fabric.

Examples of the image formation on a fabric include the following ink jet textile printing method A.

The ink jet textile printing method A has
a step of applying the ink according to the embodiment of the present disclosure to a fabric by an ink jet method (hereinafter, also referred to as "ink applying step") and
a step of heat-treating the fabric on which the ink is applied (hereinafter, also referred to as "heat treatment step").

According to the ink jet textile printing method A, an image having excellent optical density and rub resistance can be formed on a fabric.

Specific examples of the fabric will be described later.

The ink jet textile printing method A does not require a transfer step, a printing paste applying step, or the like, which may be provided in a general printing method.

The ink jet textile printing method A also does not require a steam treatment step (that is, a step of fixing an image by a steam treatment) which may be provided in a general ink jet textile printing method. In a general ink jet textile printing method, particularly, the optical density and rub resistance of an image may be secured by the steam treatment step.

In the ink jet textile printing method A, an image having excellent optical density and rub resistance can be formed on a fabric even in a case where the steam treatment step is omitted.

In the ink jet textile printing method A, the fabric to be subjected to image formation may be a fabric pretreated with an aqueous pretreatment liquid containing an aggregating agent.

In a case where the fabric to be subjected to image formation is pretreated, an image having a high color density is formed on a surface of the fabric by the action of the aggregating agent in the image forming step. Next, in the heat treatment step, the image permeates into the fabric by the action of the polymer P. Through these processes, an image having more excellent optical density and rub resistance is fixed on the fabric.

The pretreated fabric may be previously prepared prior to the implementation of the ink jet textile printing method A.

In addition, the ink jet textile printing method A may have a pretreatment step of obtaining a pretreated fabric by applying an aqueous pretreatment liquid containing an aggregating agent to a fabric before the image forming step.

Hereinafter, the respective steps which can be included in the ink jet textile printing method A will be described.

### (Pretreatment Step)

The pretreatment step is a step of obtaining a pretreated fabric by applying an aqueous pretreatment liquid containing an aggregating agent to a fabric.

The method of applying an aqueous pretreatment liquid to the fabric is not particularly limited, and examples thereof include a coating method, a padding method, an ink jet method, a spraying method, and a screen printing method.

The aggregating agent contained in the aqueous pretreatment liquid is not particularly limited as long as it acts to aggregate the colored resin particles. The aggregating agent is preferably at least one selected from an organic acid, a polyvalent metal salt, or a cationic compound, and more preferably at least one selected from a polyvalent metal salt or a cationic compound.

### -Polyvalent Metal Salt-

The polyvalent metal salt is a compound composed of a di- or higher-valent metal ion and an anion.

Specific examples thereof include calcium chloride, calcium nitrate, calcium sulfate, calcium acetate, calcium hydroxide, calcium carbonate, magnesium chloride, magnesium acetate, magnesium sulfate, magnesium carbonate, barium sulfate, barium chloride, zinc sulfide, zinc carbonate, and copper nitrate.

### -Cationic Compound-

The cationic compound is not particularly limited, and may be a low-molecular-weight compound or a polymer compound.

Examples of the low-molecular-weight cationic compound include (2-hydroxyethyl)trimethylammonium chloride, benzoylcholine chloride, benzyltriethylammonium chloride, trimethylacetohydrazideammonium chloride, 1-butyl-1-methylpyrrolidinium chloride, 3-hydroxy-4-(trimethylammonio)butyrate hydrochloride, glycidyltrimethylammonium chloride, L-carnitine hydrochloride, and alkylcarbonyloxyethyltrimethylammonium chloride having 6 to 30 carbon atoms.

Examples of the cationic polymer compound include water-soluble cationic polymers which are positively charged in water, such as polyallylamine or derivatives thereof, amine-epihalohydrin copolymers, or other quaternary ammonium salt type cationic polymers. In some cases, a water-dispersible cationic polymer can also be used.

The low-molecular-weight cationic compound is preferable from the viewpoint of a further improvement in the washing resistance of an image in a printed textile product.

The molecular weight of the low-molecular-weight cationic compound is preferably 1,000 or less, and more preferably 500 or less.

Aggregating agents may be used alone or in combination of two or more types thereof.

The aqueous pretreatment liquid contains, for example, the above-described aggregating agent and water.

The aqueous pretreatment liquid may further contain other components such as an aqueous organic solvent and a surfactant.

As components which can be contained in the aqueous pretreatment liquid, the components which can be contained in the ink can be appropriately referred to.

### (Ink Applying Step)

The ink applying step is a step of applying the ink according to the embodiment of the present disclosure to a fabric by an ink jet method.

In the present disclosure, the fabric on which the ink is applied by the ink applying step may be referred to as a colored fabric.

The application of the ink in the ink applying step can be performed using a known ink jet recording device.

The ink jet recording device is not particularly limited, and a known ink jet recording device capable of achieving a desired resolution can be optionally selected and used.

Examples of the ink jet recording device include a device including an ink supply system, a temperature sensor, and a heating unit.

The ink supply system includes, for example, a source tank containing the ink according to the embodiment of the present disclosure, a supply pipe, an ink supply tank immediately before the ink jet head, a filter, and a piezo ink jet head. The piezo ink jet head can be driven so as to eject multi-size dots of preferably 1 pL (picoliter) to 100 pL, and more preferably 8 pL to 30 pL with a resolution of preferably 320 dpi × 320 dpi to 4,000 dpi × 4,000 dpi, more preferably 400 dpi × 400 dpi to 1,600 dpi × 1,600 dpi, and even more preferably 720 dpi × 720 dpi. The dpi (dot per inch) indicates the number of dots per 2.54 cm (1 inch).

### (Heat Treatment Step)

The heat treatment step is a step of heat-treating the fabric on which the ink is applied.

By the heat treatment in this step, an image having excellent optical density and rub resistance is obtained.

The heat treatment temperature (temperature of the ink applied to the fabric) in the heat treatment step is preferably 100°C to 220°C, and more preferably 130°C to 200°C.

The heat treatment time in the heat treatment step is preferably 20 seconds to 300 seconds, more preferably 30 seconds to 240 seconds, and even more preferably 40 seconds to 180 seconds.

The heat treatment in the heat treatment step may be a steam treatment known in the ink jet textile printing. However, from the viewpoint of simplification of the step, a heat treatment other than the steam treatment is preferable.

The heat treatment other than the steam treatment is preferably a heat treatment in which the fabric on which the ink is applied (that is, colored fabric) is heat-pressed. In the heat treatment of this aspect, the ink in the colored fabric can be heat-treated by heat-pressing the colored fabric.

The heat-pressing can be performed using a known heat press machine.

As described above, even in a case where the steam treatment is omitted, an image having excellent optical density and rub resistance can be formed on a fabric by a heat treatment other than the steam treatment in the ink jet textile printing method A.

The ink jet textile printing method A may include a step other than the above steps.

Examples of other steps include known steps in the ink jet textile printing method, such as a posttreatment step of posttreating the colored fabric after the heat treatment step using a posttreatment agent.

### <Fabric>

The ink jet textile printing method A can be applied to various types of fabrics.

Examples of the fiber type of the fabric include synthetic fibers such as nylon, polyester, and acrylonitrile; semi-synthetic fibers such as acetate and rayon; natural fibers such as cotton, silk, and wool; and mixed fibers consisting of two or more selected from the group consisting of the synthetic fibers, the semi-synthetic fibers, and the natural fibers.

The fiber type of the fabric is preferably at least one selected from cotton and polyester.

Examples of the aspect of the fabric include woven fabrics, knitted fabrics, and nonwoven fabrics.

The fabric may be a fabric for a fabric product.

Examples of the fabric product include clothing items (T-shirts, tracksuits, jerseys, pants, sweatsuits, dresses, and blouses), bedding, and handkerchiefs.

### [Other Image Forming Methods]

Needless to say, the ink according to the embodiment of the present disclosure may be used for an image forming method other than the ink jet textile printing method A.

Examples of the image forming method other than the ink jet textile printing method A include a method in which the fabric in the ink jet textile printing method A is changed to a base material other than the fabric.

### Examples of the base material other than the fabric include a plastic base material.

Examples of the plastic of the plastic base material include a polyvinyl chloride (PVC) resin, cellulose diacetate, cellulose triacetate, cellulose propionate, cellulose butyrate, cellulose acetate butyrate, cellulose nitrate, polyethylene terephthalate (PET), polyethylene (PE), polystyrene (PS), polypropylene (PP), polycarbonate (PC), polyvinyl acetal, and an acrylic resin.

The plastic base material may be corona-treated.

With the ink according to the embodiment of the present disclosure, an image having excellent adhesiveness can be formed not only on a general plastic base material such as a PET base material, but also on a base material in which it is difficult to secure adhesiveness to an image formed by an aqueous ink.

Examples of the base material in which it is difficult to secure adhesiveness to an image formed by an aqueous ink include a hydrophobic base material having no polar group.

Examples of the hydrophobic base material having no polar group include a PS base material, a corona-treated PP base material (may be referred to as "corona PP"), a PE base material, and a PE-laminated paper base material.

### [Printed Textile Product]

A printed textile product according to the embodiment of the present disclosure includes a fabric and an image.

The image contains the oil-soluble dye (D) or the oil-soluble dye (D1) described above, and a polymer P containing a hydrophilic group.

The printed textile product according to the embodiment of the present disclosure may optionally include other elements.

The printed textile product according to the embodiment of the present disclosure includes an image having excellent optical density.

The reason why such an effect is exhibited is as described above.

Preferable aspects of the fabric, the oil-soluble dye (D), the oil-soluble dye (D1), and the polymer P containing a hydrophilic group are also as described above.

The image may optionally contain a component other than the above components. Regarding components which can be contained in the image, the above-described components in the ink according to the embodiment of the present disclosure can be referred to.

The manufacturing method of the printed textile product according to the embodiment of the present disclosure is not particularly limited.

The printed textile product according to the embodiment of the present disclosure can be manufactured using, for example, the ink according to the embodiment of the present disclosure, and can be preferably manufactured by the above-described ink jet textile printing method A.

### Examples

Hereinafter, examples of the present disclosure will be described. The present disclosure is not limited to the following examples.

### [Preparation of Oil-Soluble Dyes (D) and Comparative Compounds]

Specific examples d-1 to d-10 of the oil-soluble dye (D) and comparative dyes R-1 and R-2 were prepared. Furthermore, MEK solubilities of these specific examples were measured (the results are shown in Table 1 to be described later).
d-1 to d-10 also correspond to specific examples of the oil-soluble dye (D1).

These specific examples were obtained by making the following Reactive Black 5 or Acid Black 1 oil-soluble.

The comparative dyes R-1 and R-2 had no oil solubility (MEK solubility: 5 mass% or greater).

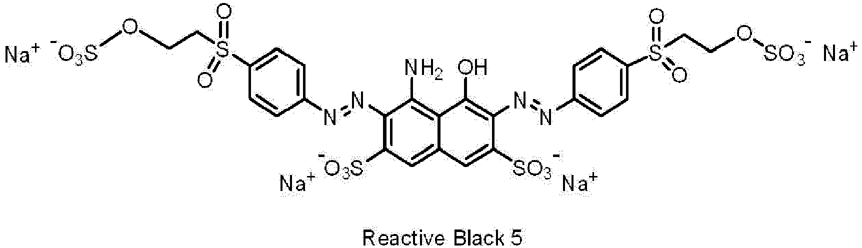

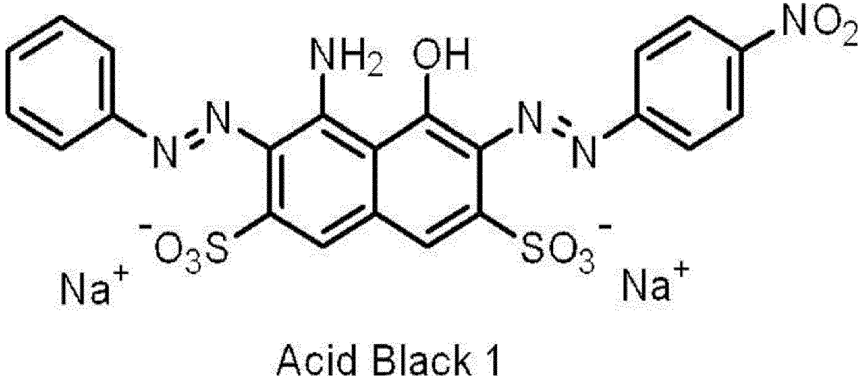

| | Oil-Soluble Dye(D) | | |
|---|---|---|---|
| | Dye Structure (before making dye oil-soluble) | Dye Structure (after making dye oil-soluble) | Cation Structure |
| d-1 | Acid Black 1 | 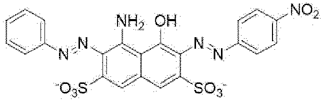 | 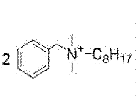 |
| d-2 | Reactive Black 5 | 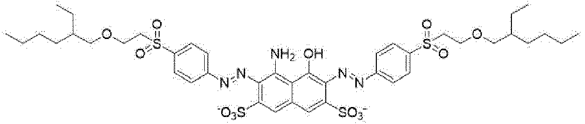 | 2Na⁺ |
| d-3 | Reactive Black 5 | 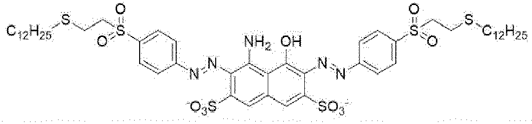 | 2Na⁺ |
| d-4 | Reactive Black 5 | 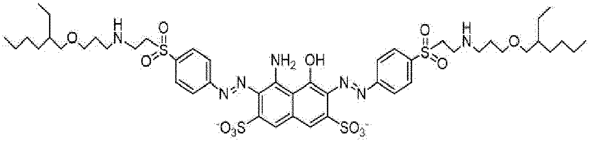 | 2Na⁺ |
| d-5 | Reactive Black 5 | 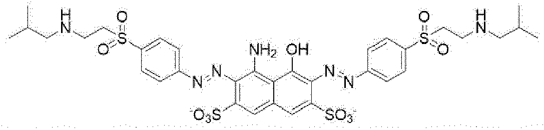 | 2Na⁺ |
| d-6 | Reactive Black 5 | 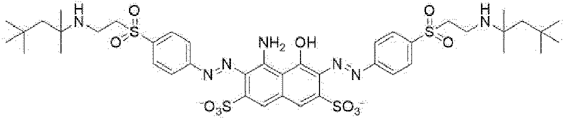 | 2Na⁺ |
| d-7 | Reactive Black 5 | 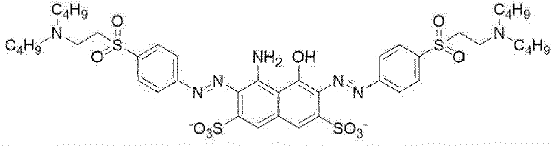 | 2Na⁺ |
| d-8 | Reactive Black 5 | 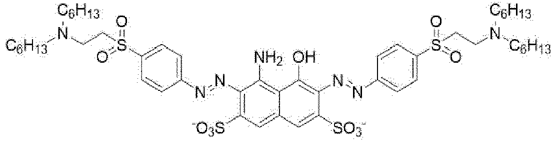 | 2Na⁺ |

| | Oil-Soluble Dye (D) | | |
|---|---|---|---|
| | Dye St ructure (before making dye oil-soluble) | Dye Structure (after making dye oil-soluble) | Cation Structure |
| d-9 | Reactive Black 5 | 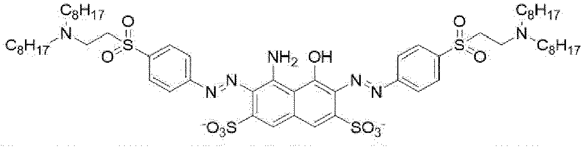 | 2Na⁺ |
| d-10 | Reactive Black 5 | 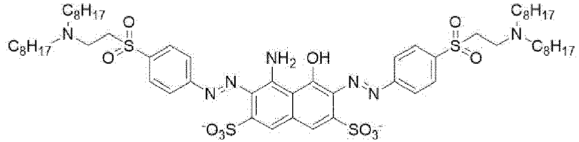 | 2K⁺ |

| | Comparative Dye | | |
|---|---|---|---|
| | Dye Structure (before making dye oil-soluble) | Dye Structure (after making dye oil-soluble) | Cation Structure |
| R-1 | Acid Black 1 | 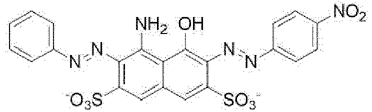 | 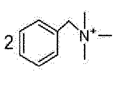 |
| R-2 | Reactive Black 5 | 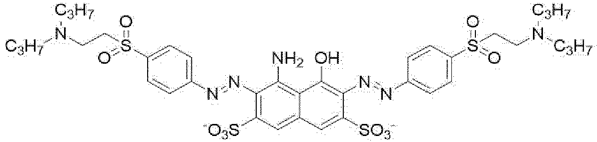 | 2Na⁺ |

Hereinafter, the operation for synthesizing each dye will be specifically shown.

### (Synthesis of D-6)

In a 300 mL three-neck recovery flask, a solution of Reactive Black 5 (20 g; manufactured by Sigma-Aldrich) in 11.84 g of water was stirred at 30°C or lower for 1 hour. Then, 5.1 g of t-octylamine (manufactured by Fujifilm Wako Pure Chemical Corporation), 31.17 g of ethyl acetate, 10.39 g of methyl ethyl ketone, and 5.71 g of sodium carbonate were added thereto, and the mixture was stirred at 60°C for 2 hours. Then, 53.4 g of water was added thereto, the mixture was cooled to 30°C, and then the mixture was stirred for 2 hours. The obtained precipitate was collected by filtration and dried to obtain d-6. The structure thereof was identified by ¹H-NMR (DMSO). The NMR data of d-6 is shown below.

### -NMR Data of d-6-

¹H-NMR (400 MHz, DMSO-d6): 15.61-15.15 (s, 1H), 10.65-10.48 (d, 2H), 8.29 (d, 2H), 8.18-7.90 (m, 6H), 7.49 (s, 1H), 7.41 (s, 1H), 3.48-3.44 (q, 4H), 2.81-2.72 (q, 4H), 1.29 (s, 4H), 1.12 (s, 12H), 0.93 (s, 18H)

### (Synthesis of d-2 to d-5 and d-7 to d-9)

d-2 to d-5 and d-7 to d-9 were obtained in the same manner as in the synthesis of d-6, except that t-octylamine was changed to
the same number of moles of 2-ethylhexanol,
the same number of moles of 1-dodecylthiol,
the same number of moles of 3-(2-ethylhexyloxy)propylamine,
the same number of moles of isobutylamine,
the same number of moles of dibutylamine,
the same number of moles of dihexylamine, or
the same number of moles of dioctylamine.

The structures thereof were also identified by ¹H-NMR (DMSO).

### -NMR data of d-2-

¹H-NMR (400 MHz, DMSO-d6): 15.61-15.15 (s, 1H), 10.65-10.48 (d, 2H), 8.29 (d, 2H), 8.18-7.90 (m, 6H), 7.49 (s, 1H), 7.41 (s, 1H), 3.48-3.44 (q, 4H), 2.81-2.72 (q, 4H), 1.57-1.50 (m, 6H), 1.31-1.12 (m, 16H), 0.89-0.75 (m, 12H)

### -NMR data of d-3-

¹H-NMR (400 MHz, DMSO-d6): 15.61-15.15 (s, 1H), 10.65-10.48 (d, 2H), 8.29 (d, 2H), 8.18-7.90 (m, 6H), 7.49 (s, 1H), 7.41 (s, 1H), 3.15-3.44 (m, 8H), 2.81-2.72 (q, 4H), 2.41 (t, 4H), 1.58-1.41 (m, 8H), 1.29-1.25 (m, 32H), 0.90-0.76 (m, 6H)

### -NMR data of d-4-

¹H-NMR (400 MHz, DMSO-d6): 15.61-15.15 (s, 1H), 10.65-10.48 (d, 2H), 8.29 (d, 2H), 8.18-7.90 (m, 6H), 7.49 (s, 1H), 7.41 (s, 1H), 3.48-3.44 (q, 6H), 2.81-2.72 (q, 4H), 2.50-2.41 (m, 4H), 1.57-1.50 (m, 10H), 1.31-1.12 (m, 16H), 0.89-0.75 (m, 12H)

### -NMR data of d-5-

¹H-NMR (400 MHz, DMSO-d6): 15.61-15.15 (s, 1H), 10.65-10.48 (d, 2H), 8.29 (d, 2H), 8.18-7.90 (m, 6H), 7.49 (s, 1H), 7.41 (s, 1H), 3.48-3.44 (q, 4H), 2.81-2.72 (q, 4H), 2.50-2.41 (m, 4H), 1.67 (s, 2H), 0.89-0.75 (m, 12H)

### -NMR data of d-7-

¹H-NMR (400 MHz, DMSO-d6): 15.61-15.15 (s, 1H), 10.65-10.48 (d, 2H), 8.29 (d, 2H), 8.18-7.90 (m, 6H), 7.49 (s, 1H), 7.41 (s, 1H), 3.48-3.44 (q, 4H), 2.81-2.72 (q, 4H), 2.25 (q, 8H), 1.29-1.12 (m, 16H), 0.89-0.81 (m, 12H)

### -NMR data of d-8-

¹H-NMR (400 MHz, DMSO-d6): 15.61-15.15 (s, 1H), 10.65-10.48 (d, 2H), 8.29 (d, 2H), 8.18-7.90 (m, 6H), 7.49 (s, 1H), 7.41 (s, 1H), 3.48-3.44 (q, 4H), 2.81-2.72 (q, 4H), 2.25 (q, 8H), 1.29-1.12 (m, 32H), 0.89-0.81 (m, 12H)

### -NMR data of d-9-

¹H-NMR (400 MHz, DMSO-d6): 15.61-15.15 (s, 1H), 10.65-10.48 (d, 2H), 8.29 (d, 2H), 8.18-7.90 (m, 6H), 7.49 (s, 1H), 7.41 (s, 1H), 3.48-3.44 (q, 4H), 2.81-2.72 (q, 4H), 2.25 (q, 8H), 1.29-1.12 (m, 48H), 0.89-0.81 (m, 12H)

### (Synthesis of d-10)

d-10 was obtained in the same manner as in the synthesis of d-9, except that as a raw material, Reactive Black 5 in the form of K salt was used instead of Reactive Black 5 in the form of Na salt, and sodium carbonate was changed to the same number of moles of potassium carbonate. The structure thereof was identified by ¹H-NMR (DMSO). Since the NMR data thereof is equivalent to that of d-9, it is omitted.

### (Synthesis of d-1)

141.9 g of a 10 mass% aqueous solution of benzyldimethyloctylammonium chloride was added to a 500 mL recovery flask. Then, 154.1 g of a 10 mass% aqueous solution of Acid Black 1 was added dropwise for 30 minutes, and the mixture was stirred for 2 hours. The obtained precipitate was collected by a filter cloth and dried to obtain d-1. The structure thereof was identified by ¹H-NMR (DMSO). The NMR data of d-1 is shown below.

### -NMR data of d-1-

¹H-NMR (400 MHz, DMSO-d6): 10.80 (s, 1H), 10.58 (s, 1H), 8.39 (d, 2H), 8.23 (d, 2H), 7.81 (q, 2H), 7.61-7.42 (m, 13H), 7.40 (s, 1H), 7.28 (t, 1H), 4.51 (s, 4H), 3.19-3.29 (m, 4H), 2.91 (s, 12H), 1.31-1.20 (m, 24H), 0.89-0.80 (t, 6H)

### (Synthesis of R-1)

R-1 was obtained in the same manner as in the synthesis of d-1, except that benzyldimethyloctylammonium chloride was changed to the same number of moles of benzyltrimethylammonium chloride.

The structure thereof was identified by ¹H-NMR (DMSO). The NMR data is omitted.

### (Synthesis of R-2)

R-2 was obtained in the same manner as in the synthesis of d-6, except that t-octylamine was changed to the same number of moles of dipropylamine.

The structure thereof was identified by ¹H-NMR (DMSO). The NMR data is omitted.

### [Example 1]

### <Synthesis of Polymer P>

In a three-neck flask,
176.2 g of hexamethylene diisocyanate (HDI) as a compound for forming a unit (1),
68.1 g of 2,2-dimethylolpropionic acid (DMPA) as a compound for introducing a hydrophilic group,
491.9 g of a compound "(2-18) PC T5651" (polycarbonate diol) as a compound for forming a unit (2), and
1202.62 g of ethyl acetate
were charged and heated to 70°C.

Here, the compound "(2-18) PC T5651" is DURANOL (registered trademark) T5651 manufactured by Asahi Kasei Corporation (in the table, simply written as "T5651". Mn is 1,000. Rc¹ and Rc² each are an alkylene group having 5 or 6 carbon atoms).

Next, 2.454 g of NEOSTANN U-600 (manufactured by NITTO KASEI CO., LTD., inorganic bismuth catalyst; hereinafter, also referred to as "U-600") was added to the three-neck flask, and the mixture was stirred at 70°C for 5 hours.

Next, 515.41 g of isopropyl alcohol and 711.75 g of ethyl acetate were added thereto, and the mixture was stirred at 70°C for 3 hours.

The reaction liquid after stirring for 3 hours was left to cool to room temperature (23°C), and then the concentration thereof was adjusted with ethyl acetate to obtain a 30 mass% solution of a polymer P (the solvent was a mixed solution of ethyl acetate/isopropyl alcohol).

A part of the above-described amount of the isopropyl alcohol also functions as a terminal sealing agent for the polymer P.

Table 1 shows the type, Mw, Tg (°C), and acid value (mmol/g) of the compound (raw material) for forming each unit in the polymer P.

### <Preparation of Pretreatment Liquid>

Components of the following composition were mixed to obtain a pretreatment liquid PC-1.

### -Composition of Pretreatment Liquid PC-1-

PAS-H-1L (aggregating agent (diallyldimethylammonium chloride polymer), manufactured by Nittobo Medical Co., Ltd., solid content: 28 mass%) (100 parts by mass)
- BYK348 (manufactured by BYK-Chemie Japan K.K) (5 parts by mass)
- 2-Pyrrolidone (50 parts by mass)
- Glycerin (50 parts by mass)
- Water (845 parts by mass)

### <Preparation of Colored Resin Particle Dispersion>

### (Preparation of Oil Phase Component)

Ethyl acetate, a 30 mass% solution of a polymer P, and d-1 as an oil-soluble dye (D) were mixed and stirred for 15 minutes to obtain 149.8 g of an oil phase component having a solid content of 30 mass%.

In the preparation of the oil phase component, the amounts of the 30 mass% solution of the polymer P and d-1 used were adjusted so that
the content of the polymer P with respect to the solid content of colored resin particles to be manufactured was 40 mass%,
the content of d-1 with respect to the solid content of colored resin particles to be manufactured was 60 mass%, and
the mass ratio [P/dye] (that is, the mass ratio of the content of the polymer P to the content of the oil-soluble dye) in colored resin particles to be manufactured was 0.67.

### (Preparation of Water Phase Component)

A water phase component was prepared by mixing 135.3 g of distilled water and sodium hydroxide as a neutralizing agent and stirring the mixture for 15 minutes.

The amount of the sodium hydroxide used as a neutralizing agent was adjusted such that the degree of neutralization (that is, the ratio of the number of sodium salts of carboxyl groups to the total number of sodium salts of carboxyl groups and the carboxyl groups) was 90% in colored resin particles to be manufactured.

### (Preparation of Colored Resin Particle Dispersion)

The oil phase component and the water phase component were mixed, and the obtained mixture was emulsified at 18,000 rpm for 10 minutes using a homogenizer at room temperature to obtain an emulsion. The obtained emulsion was added to 48.0 g of distilled water, and the obtained liquid was heated to 50°C and stirred at 50°C for 5 hours to distill off the ethyl acetate and isopropyl alcohol from the liquid.

The liquid in which the ethyl acetate and isopropyl alcohol were distilled off was diluted with distilled water so that the solid content was 20 mass%, and thus a black colored resin particle dispersion containing colored resin particles and water was obtained.

The volume average particle diameter of the colored resin particles in the colored resin particle dispersion was 150 nm (the same also applies to Examples 2 to 17 and Comparative Examples 1 and 2 to be described later).

### <Preparation of Ink>

The colored resin particle dispersion, the following surfactant, glycerin, and distilled water were mixed, and the obtained mixture was filtered with a membrane filter (pore diameter: 1 µm) made of polytetrafluoroethylene (PTFE) to obtain an ink having the following composition. The ink of Example 1 is a black ink.

### -Composition of Ink-

- Solid Content of Colored Resin Particles (that is, solid content in the colored resin particle dispersion) ... 10 parts by mass
- Surfactant ("OLFINE E1010" manufactured by Nissin Chemical Industry Co., Ltd.) ... 1 part by mass
- Glycerin ... 20 parts by mass
- Distilled Water ... 69 parts by mass

### <Ink Jet Textile Printing>

Inkjet textile printing was performed using the pretreatment liquid and the ink.

Generally, a cotton fabric was pretreated with the pretreatment liquid, the ink was applied to the pretreated cotton fabric to obtain a colored fabric, and the obtained colored fabric was heat-treated. Accordingly, a printed textile product was obtained.

The details will be shown below.

### (Pretreatment of Cotton Fabric)

The pretreatment liquid PC-1 was permeated into a cotton fabric (cotton broadcloth 40, manufactured by Shikisensha CO., LTD.) by a padding method with a squeezing ratio of 60%, and dried for 24 hours.

Here, the squeezing ratio (%) represents the residual amount (mass ratio) of the aqueous pretreatment liquid with respect to the fabric after squeezing the fabric including the aqueous pretreatment liquid.

### (Application of Ink)

Using an ink jet printer (PX-045A, manufactured by Seiko Epson Corporation), the ink was applied to the above-described pretreated cotton fabric to form a solid image, and a colored fabric was obtained. The amount of ink applied was 15 g/m².

### (Heat Treatment (heat-pressing))

The colored fabric was dried at 20°C for 12 hours.

The colored fabric after drying was heat-treated at 140°C for 120 seconds using a heat press machine (desktop automatic flat press machine AF-54TEN, manufactured by Asahi Garment Machinery Co., Ltd.). Thus, the solid image in the colored fabric after drying was heat-treated, and a printed textile product was obtained.

### <Evaluation>

The following evaluation was performed using the ink and the printed textile product. The results are shown in Table 1.

### (Optical Density of Image)

The optical density (optical density (OD) value) of the image in the printed textile product was measured, and the optical density of the image was evaluated according to the following evaluation standards.

The OD value was measured using a colorimeter (Gretag Macbeth Spectrolino, manufactured by X-Rite, Inc.).

In the following evaluation standards, the highest optical density of the image is represented by level SSS.

### -Standards for Evaluation of Optical Density of Image-

SSS: The OD value is 1.7 or greater.
SS: The OD value is 1.6 or greater and less than 1.7.
S: The OD value is 1.4 or greater and less than 1.6.
A: The OD value is 1.2 or greater and less than 1.4.
B: The OD value is 1.0 or greater and less than 1.2.
C: The OD value is 0.8 or greater and less than 1.0.
D: The OD value is less than 0.8.

### (Washing Resistance of Image)

The washing resistance of the image in the printed textile product was evaluated based on ISO 105-C06.

In the results of the evaluation of the washing resistance of the image, the highest washing resistance of the image is represented by level 5.

### (Rub Resistance of Image)

The rub resistance of the image in printed textile product was evaluated based on ISO 105-X12.

The rub resistance of the image was evaluated under dry conditions and wet conditions, respectively.

Here, the dry condition (in Table 1, simply written as "dry") means that the rubbing is performed with a dry white cloth containing no water, and the wet condition (in Table 1, simply written as "wet") means that the rubbing is performed with a white cloth containing water.

In the results of the evaluation of the rub resistance of the image, the highest rub resistance of the image is represented by level 5.

In the results of the evaluation of the washing resistance and the rub resistance in Table 1,
"1-2" means that the level is higher than 1 and lower than 2,
"2-3" means that the level is higher than 2 and lower than 3,
"3-4" means that the level is higher than 3 and lower than 4, and
"4-5" means that the level is higher than 4 and lower than 5.

### (Jetting Property of Ink)

The jetting property of the ink was evaluated as an indicator of the dispersion stability of the colored resin particles in the colored resin particle dispersion. The details will be shown below.

The ink stored at room temperature within 1 day after the preparation was ejected for 30 minutes from a head of an ink jet printer (manufactured by FUJIFILM Dimatix, Inc., DMP), and then the ejection was stopped. After 5 minutes from the stop of the ejection, the ink was ejected again from the head onto a polystyrene base material ("falcon hi impact polystyrene" manufactured by Robert Home Group Ltd.) to form a solid image of 5 cm × 5 cm.

The obtained solid image was visually observed to confirm whether dots were missed due to the occurrence of a non-ejection nozzle or the like, and the jetting property of the ink was evaluated according to the following evaluation standards.

In the following evaluation standards, the highest jetting property of the ink is represented by level A.

### -Standards for Evaluation of Jetting Property-

A: Dot omission due to the occurrence of a non-ejection nozzle or the like was not confirmed, and a satisfactory image was obtained.
B: Dot omission due to the occurrence of a non-ejection nozzle or the like was slightly confirmed, but the dot omission did not cause any problems in practical use.
C: Dot omission due to the occurrence of a non-ejection nozzle or the like was generated, and the image was not able to be used in practice.
D: The ink was not able to be ejected from the head.

### (Storage Stability of Ink)

The storage stability of the ink was evaluated as an index of the dispersion stability of the colored resin particles in the colored resin particle dispersion. The details will be shown below.

The ink stored at room temperature within 1 day after the preparation was sealed in a container and left at 50°C for 4 weeks.

Using the ink after 4 weeks, the evaluation was performed in the same manner as in the evaluation of the jetting property.

### [Examples 2 to 10]

The operation was performed in the same manner as in Example 1, except that d-1 as the oil-soluble dye was changed to an oil-soluble dye of the same mass shown in Table 1.

The results are shown in Table 1.

### [Examples 11 to 13 and 15 to 17]

The operation was performed in the same manner as in Example 1, except for the following points.

The results are shown in Table 1.

### -Changes from Example 1-

- In the synthesis of the polymer P contained in the ink, the combination of the type of the compound for forming a unit (1) and the type of the compound for forming a unit (2) was changed as shown in Table 1 without changing the total mass of the compound for forming a unit (1) and the compound for forming a unit (2) used and the molar ratio [compound for forming a unit (2)/compound for forming a unit (1)]. In Table 1, the type of the compound for forming a unit (1) and the type of the compound for forming a unit (2) correspond to the references of the above-described specific examples, respectively.
- In Example 13, as the compound for forming a unit (2), the same number of moles of "(2-22) PEG (Mn=30,000)" and "(2-18) PC T5651" were used, and the total number of moles thereof was adjusted to be the same as the number of moles of "(2-18) PC T5651" in Example 1.
- The reaction conditions (reaction temperature and reaction time) were adjusted so that the weight-average molecular weight of the polymer P was 15,000.

### [Example 14]

The operation was performed in the same manner as in Example 13, except that the pretreatment liquid PC-1 was changed to a pretreatment liquid PC-2 having the following composition.

The results are shown in Table 1.

### -Composition of Pretreatment Liquid PC-2-

- The following compound (X1)
   ... 10 mass%
- 2-Pyrrolidone
   ... 16 mass%
- 2-Methyl-1,3-propanediol
   ... 9 mass%
- Water
   ... added so that the total amount reached 100 mass%

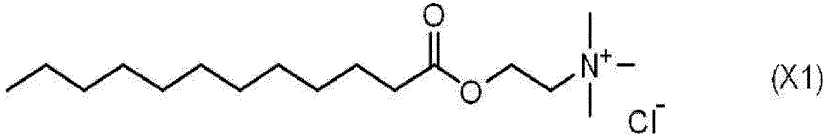

### [Comparative Examples 1 and 2]

The operation was performed in the same manner as in Example 1, except that d-1 as the oil-soluble dye was changed to a comparative dye of the same mass shown in Table 1.

The results are shown in Table 1.

Both the comparative dyes R-1 and R-2 had a MEK solubility of less than 5 mass% and were not oil-soluble dyes.

**[Table 1]**

| | Colored Resin Particles in Ink | | | | | | | | Pretreatment Liquid | Evaluation Results | | | | | |
|---|---|---|---|---|---|---|---|---|---|---|---|---|---|---|---|
| | Oil-Soluble Dve | | Polvmer P or Comparative Compound | | | | | | Type | Optical Density | Washing Resistance | Rub Resistance | | Jetting Property | Storage Stability |
| | Type | MEK Solubility (mass%) | Raw Materials | | | Polvmer Properties | | | | | | Dry | Wet | | |
| | | | Compound for Introducing Hydrophilic Group | Compound for Forming Formula (1) | Compound for Forming Formula (2) | Mw | Tg (°C) | Acid value (mmol/g) | | | | | | | |
| Example 1 | d-1 | 7 | DMPA | HDI | (2-18) PC T5651 | 15000 | 0 | 0.69 | PC-1 | S | 4 | 4-5 | 4 | B | A |
| Example 2 | d-2 | 10 | DMPA | HDI | (2-18) PC T5651 | 15000 | 0 | 0.69 | PC-1 | SS | 4 | 4-5 | 4 | B | A |
| Example 3 | d-3 | 10 | DMPA | HDI | (2-18) PC T5651 | 15000 | 0 | 0.69 | PC-1 | SS | 4 | 4-5 | 4 | B | A |
| Example 4 | d-4 | 10 | DMPA | HDI | (2-18) PC T5651 | 15000 | 0 | 0.69 | PC-1 | SSS | 4-5 | 4-5 | 4 | A | A |
| Example 5 | d-5 | 7 | DMPA | HDI | (2-18) PC T5651 | 15000 | 0 | 0.69 | PC-1 | SSS | 4-5 | 4-5 | 4 | A | A |
| Example 6 | d-6 | 10 | DMPA | HDI | (2-18) PC T5651 | 15000 | 0 | 0.69 | PC-1 | SSS | 4-5 | 4-5 | 4 | A | A |
| Example 7 | d-7 | 7 | DMPA | HDI | (2-18) PC T5651 | 15000 | 0 | 0.69 | PC-1 | SSS | 4-5 | 4-5 | 4 | A | A |
| Example 8 | d-8 | 10 | DMPA | HDI | (2-18) PC T5651 | 15000 | 0 | 0.69 | PC-1 | SSS | 4-5 | 4-5 | 4 | A | A |
| Example 9 | d-9 | 10 | DMPA | HDI | (2-18) PC T5651 | 15000 | 0 | 0.69 | PC-1 | SSS | 4-5 | 4-5 | 4 | A | A |
| Example 10 | d-10 | 10 | DMPA | HDI | (2-18) PC T5651 | 15000 | 0 | 0.69 | PC-1 | SSS | 4-5 | 4-5 | 4 | A | A |
| Example 11 | d-6 | 10 | DMPA | HDI | (2-22) PEG (Mn=10,000) | 15000 | -10 | 0.69 | PC-1 | SSS | 4-5 | 4-5 | 4 | A | A |
| Example 12 | d-6 | 10 | DMPA | HDI | (2-22) PEG (Mn=30,000) | 15000 | -10 | 0.69 | PC-1 | SSS | 4-5 | 4-5 | 4 | A | A |
| Example 13 | d-6 | 10 | DMPA | HDI | (2-22) PEG (Mn=30,000)/ (2-18) PC T5651 | 15000 | -5 | 0.69 | PC-1 | SSS | 4-5 | 4-5 | 4 | A | A |
| Example 14 | d-6 | 10 | DMPA | HDI | (2-22) PEG (Mn=30,000)/ (2-18) PC T5651 | 15000 | -5 | 0.69 | PC-2 | SSS | 5 | 4-5 | 4 | A | A |
| Example 15 | d-6 | 10 | DMPA | XDI | (2-18) PC T5651 | 15000 | 10 | 0.69 | PC-1 | SSS | 4-5 | 4-5 | 4 | A | A |
| Example 16 | d-6 | 10 | DMPA | HDI | (2-e) | 15000 | 20 | 0.69 | PC-1 | SSS | 4-5 | 4 | 4 | A | B |
| Example 17 | d-6 | 10 | DMPA | HDI | (2-5) | 15000 | 20 | 0.69 | PC-1 | SSS | 4-5 | 4 | 4 | A | B |
| Comparative Example 1 | R-1 | 1 | DMPA | HDI | (2-18) PC T5651 | 15000 | 0 | 0.69 | PC-1 | A | 3 | 4-5 | 4 | C | D |
| Comparative Example 2 | R-2 | 3 | DMPA | HDI | (2-18) PC T5651 | 15000 | 0 | 0.69 | PC-1 | A | 3 | 4-5 | 4 | C | D |

As shown in Table 1, the examples, using the oil-soluble dye (D) obtained by modifying a water-soluble reactive dye with an alkyl group having 4 or more carbon atoms, or exchanging a counter cation in an acid dye with an organic cation containing an alkyl group having 4 or more carbon atoms, were excellent in the optical density of the image and the storage stability of the ink.

On the other hand, in Comparative Example 1 using the comparative dye R-1 obtained by exchanging a counter cation in an acid dye with an organic cation containing no alkyl group having 4 or more carbon atoms, and Comparative Example 2 using the comparative dye R-2 obtained by modifying a water-soluble reactive dye with an alkyl group having 3 or less carbon atoms, the optical density of the image and the storage stability of the ink were lowered. These comparative dyes R-1 and R-2 had a MEK solubility of less than 5 mass% and did not correspond to oil-soluble dyes.

From the comparison between Examples 1 and Examples 2 to 17, it is found that in a case where the oil-soluble dye (D) obtained by modifying a water-soluble reactive dye with an alkyl group having 4 or more carbon atoms is used (Examples 2 to 17), the optical density of the image is further improved.

From the comparison between Examples 2 and 3 and Examples 4 to 17, it is found that in a case where the oil-soluble dye corresponding to the oil-soluble dye (D3) is used (Examples 4 to 17), the optical density of the image is further improved.

From the comparison between Examples 6 and 11 to 15 and Examples 16 and 17, it is found that in a case where L² in the unit (2) in the polymer P is a polymer chain having a number-average molecular weight of 500 or greater which consists of a polycarbonate chain or a polyether chain (Examples 6 and 11 to 15), the rub resistance of the image and the storage stability of the ink are further improved.

As described above, the example group in which the black-colored resin particle dispersion is used as the colored resin particle dispersion according to the embodiment of the present disclosure has been shown. However, needless to say, the same effects as those of the above-described example group can be obtained even in a case where instead of or in addition to the black-colored resin particle dispersion, at least one type of colored resin particle dispersion having another color is used.

The entire disclosure of JP2019-180626 filed on September 30, 2019 is incorporated herein by reference.

All literatures, patent applications, and technical standards described herein are incorporated herein by reference to the same extent as if each literature, patent application, or technical standard is specifically and individually indicated as being incorporated by reference.

## Claims

1. A colored resin particle dispersion comprising:
water; and
colored resin particles containing a polymer P containing a hydrophilic group and an oil-soluble dye,
wherein the oil-soluble dye includes an oil-soluble dye (D) obtained by modifying a water-soluble reactive dye with an alkyl group having 4 or more carbon atoms, or exchanging a counter cation in an acid dye with an organic cation containing an alkyl group having 4 or more carbon atoms.

2. A colored resin particle dispersion comprising:
water; and
colored resin particles containing an oil-soluble dye and a polymer P containing a hydrophilic group,
wherein the oil-soluble dye includes an oil-soluble dye (D1) represented by Formula (D1), 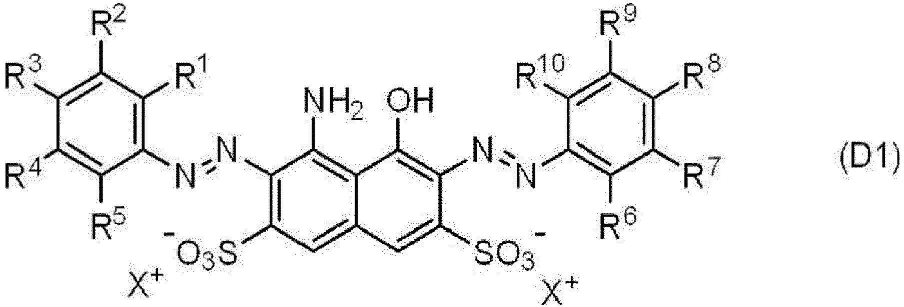
in Formula (D1),
R¹ to R¹⁰ each independently represent a hydrocarbon group having 1 to 60 carbon atoms which may contain an oxygen atom, a nitrogen atom, a sulfur atom, or a chlorine atom, a hydrogen atom, a chlorine atom, a nitro group, an amino group, a sulfo group, or a salt of a sulfo group,
two X⁺'s represent an inorganic cation or an organic cation, and
at least one of a condition that at least one of R¹, ..., or R¹⁰ is a group containing an alkyl group having 4 or more carbon atoms, or a condition that at least one of two X⁺'s is an organic cation containing an alkyl group having 4 or more carbon atoms is satisfied.

3. The colored resin particle dispersion according to claim 2,
wherein the oil-soluble dye (D1) is an oil-soluble dye (D2) represented by Formula (D2), 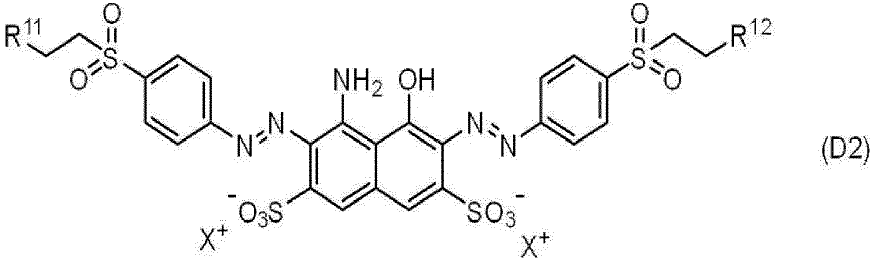
in Formula (D2),
R¹¹ and R¹² each independently represent a hydrocarbon group having 1 to 50 carbon atoms which may contain an oxygen atom, a nitrogen atom, or a sulfur atom,
two X⁺'s represent an inorganic cation or an organic cation, and
at least one of a condition that at least one of R¹¹ or R¹² is a group containing an alkyl group having 4 or more carbon atoms, or a condition that at least one of two X⁺'s is an organic cation containing an alkyl group having 4 or more carbon atoms is satisfied.

4. The colored resin particle dispersion according to claim 2 or 3,
wherein the oil-soluble dye (D1) is an oil-soluble dye (D3) represented by Formula (D3), 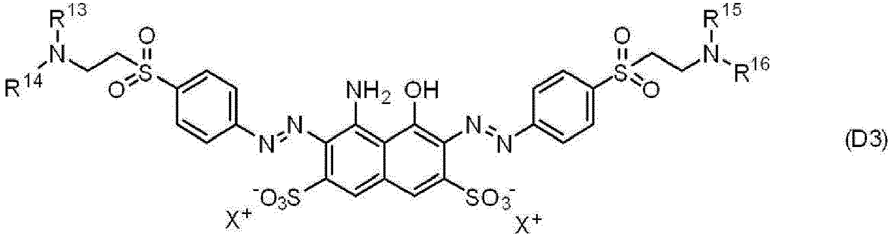
in Formula (D3),
R¹³ to R¹⁶ each independently represent a hydrocarbon group having 1 to 25 carbon atoms which may contain an oxygen atom, a nitrogen atom, or a sulfur atom, or a hydrogen atom,
two X⁺'s represent an inorganic cation or an organic cation, and
at least one of a condition that at least one of R¹³, ..., or R¹⁶ is a group containing an alkyl group having 4 or more carbon atoms, or a condition that at least one of two X⁺'s is an organic cation containing an alkyl group having 4 or more carbon atoms is satisfied.

5. The colored resin particle dispersion according to claim 4,
wherein in Formula (D3),
at least one of R¹³, ..., or R¹⁶ is a group containing an alkyl group having 4 or more carbon atoms, and
each of two X⁺'s is K⁺ or Na⁺.

6. The colored resin particle dispersion according to any one of claims 1 to 5,
wherein the polymer P containing a hydrophilic group further contains a structural unit represented by Formula (1) and a structural unit represented by Formula (2), 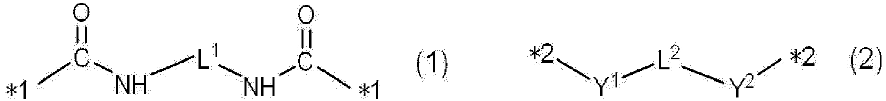
in Formula (1),
L¹ represents a hydrocarbon group, and
two ^{∗}1's each represent a bonding position, and
in Formula (2),
L² represents a hydrocarbon group having 2 to 50 carbon atoms which may contain an oxygen atom, a nitrogen atom, or a sulfur atom, or a polymer chain having a number-average molecular weight of 500 or greater which consists of a polyether chain, a polyester chain, a polycaprolactone chain, a polycarbonate chain, a polybutadiene chain, a polyisoprene chain, or a polyolefin chain,
Y¹ and Y² each independently represent -O-, -S-, or -NRz-,
Rz represents a hydrogen atom or a hydrocarbon group having 1 to 20 carbon atoms, and
two ^{∗}2's each represent a bonding position.

7. The colored resin particle dispersion according to claim 6,
wherein L² in Formula (2) is a polymer chain having a number-average molecular weight of 500 or greater which consists of a polycarbonate chain or a polyether chain.

8. The colored resin particle dispersion according to any one of claims 1 to 7,
wherein a glass transition temperature of the polymer P containing a hydrophilic group is 50°C or lower.

9. The colored resin particle dispersion according to any one of claims 1 to 8,
wherein the hydrophilic group in the polymer P containing a hydrophilic group is at least one selected from the group consisting of a carboxyl group and a salt of a carboxyl group.

10. The colored resin particle dispersion according to any one of claims 1 to 9,
wherein a weight-average molecular weight of the polymer P containing a hydrophilic group is 8,000 to 30,000.

11. An ink comprising:
the colored resin particle dispersion according to any one of claims 1 to 10.

12. The ink according to claim 11, which is used as an ink jet ink.

13. The ink according to claim 11 or 12, which is used as an ink for textile printing.

14. An ink set comprising:
two or more types of inks,
wherein at least one of the two or more types of inks is the ink according to any one of claims 11 to 13.

15. An ink jet textile printing method comprising:
a step of applying the ink according to any one of claims 11 to 13 to a fabric by an ink jet method; and
a step of obtaining a printed textile product by heat-treating the fabric to which the ink is applied.

16. A manufacturing method of an oil-soluble dye comprising:
a step of obtaining an oil-soluble dye by a method (1) of reacting a water-soluble reactive dye with a primary amine compound containing a group containing an alkyl group having 4 or more carbon atoms, a secondary amine compound containing a group containing an alkyl group having 4 or more carbon atoms, a hydroxy compound containing a group containing an alkyl group having 4 or more carbon atoms, or a thiol compound containing a group containing an alkyl group having 4 or more carbon atoms, or a method (2) of reacting an acid dye with a salt containing an organic cation containing an alkyl group having 4 or more carbon atoms.

17. A printed textile product comprising:
a fabric; and
an image,
wherein the image includes an oil-soluble dye (D) obtained by modifying a water-soluble reactive dye with an alkyl group having 4 or more carbon atoms, or exchanging a counter cation in an acid dye with an organic cation containing an alkyl group having 4 or more carbon atoms, and a polymer P containing a hydrophilic group.
